# EUROPÄISCHE PATENTSCHRIFT

(11) **EP 4 396 653 B1**
(45) Veröffentlichungstag und Bekanntmachung des Hinweises auf die Patenterteilung: **28.01.2026**
(21) Anmeldenummer: 22773168.4
(22) Anmeldetag: 02.09.2022
(51) Int. Cl.: G06F 3/01, G06F 3/0362

(54) **VERFAHREN ZUM BETREIBEN EINES EINGABEGERÄTS UND EINGABEGERÄT**
METHOD FOR OPERATING AN INPUT DEVICE, AND INPUT DEVICE
PROCÉDÉ DE FONCTIONNEMENT D'UN DISPOSITIF D'ENTRÉE, ET DISPOSITIF D'ENTRÉE

(30) Priorität: 04.09.2021 DE 102021122925; 06.09.2021 DE 102021123033
(43) Veröffentlichungstag der Anmeldung: 10.07.2024
(73) Patentinhaber: INVENTUS Engineering GmbH, 6771 St. Anton i.M. (AT)
(72) Erfinder: BRANDL, Mathias, 6780 Schruns (AT); BATTLOGG, Stefan, 6771 St. Anton i.M. (AT); EBERL, Martin, 4851 Gampern (AT); RAAB, Bernhard, 4840 Vöcklabruck (AT)
(74) Vertreter: BSB Patentanwälte Schütte & Engelen Partnerschaft mbB
(86) Internationale Anmeldenummer: PCT/EP2022/074422
(87) Internationale Veröffentlichungsnummer: WO 2023/031381

(56) Entgegenhaltungen:
- DE-A1- 102019 117 336
- US-A1- 2018 164 901
- US-A1- 2020 122 575

## Beschreibung

Die vorliegende Erfindung betrifft ein Verfahren zum Betreiben eines Eingabegeräts sowie ein solches Eingabegerät. Wenigstens ein Eingabeelement des Eingabegeräts wird zur Durchführung einer Eingabe wenigstens teilweise manuell betätigt.

Derartige Eingabegeräte finden beispielsweise als Mausräder in Computermäusen oder als Bedienknöpfe an Lenkrädern von Autos vielfache Verwendung. Im Stand der Technik bekannte Eingabegeräte haben den Nachteil, dass die zur Steuerung bekannten Verfahren nur ein für einen Benutzer unzureichendes Feedback geben.

Mausräder und auch Bedienwalzen an Lenkrädern von Kraftfahrzeugen weisen meist ein fühlbares Raster auf, um dem Benutzer beim Drehen ein haptisches Feedback zu geben. Der Benutzer kann dadurch das Eingabegerät gezielter steuern.

Wenn der Benutzer aber z. B. am Computer mit einer Computermaus durch ein langes Dokument scrollen will, muss er das Mausrad oft viele Male drehen, um entsprechend weiter zu gelangen. Das kann relativ viel Zeit benötigen und der Benutzer muss andauernd das Mausrad drehen. Alternativ kann der Benutzer mit der Maustaste den Scrollbalken festhalten und an dem Bildschirm hoch- oder herunterziehen, um schneller vor oder zurück zu gelangen. Dazu muss der Benutzer aber die Computermaus neu auf dem Bildschirm ausrichten und den Scrollbalken fixieren. Einfacher wäre es, wenn der Benutzer durch schnelleres Drehen des Mausrades schneller durch das Dokument gelangen würde. Ein Nachteil dabei ist aber die Rasterung des Mausrades, welches der Drehbewegung einen periodischen Widerstand entgegensetzt. Die Rasterung ist aber für das Bediengefühl vorteilhaft.

Die Druckschriften US 2018/164901 A1, US 2020/122575 A1 und DE 10 2019 117336 A1 offenbaren Computerperipherie-Schnittstellengeräte wie Computermäuse und Verfahren, wobei verschiedene Reibprofile für das Mausrad einstellbar sind. Damit kann an bestimmten Punkten gestoppt werden. Bei langen Listen ist das keine Hilfe.

Demgegenüber ist es die Aufgabe der vorliegenden Erfindung, die Bedienbarkeit des Eingabegeräts zu verbessern. Beispielsweise soll der Benutzer z. B. mit einer Computermaus oder einem Bedienrad an einem Kraftfahrzeug einfacher durch längere Listen navigieren können. Insbesondere sollen der Bedienungskomfort und/oder die Ergonomie verbessert und der Benutzer bei der Arbeit mit dem Eingabegerät besser unterstützt werden. Bevorzugt sollen die Benutzung des Eingabegeräts und die Durchführung von Eingaben intuitiver gestaltet werden.

Diese Aufgabe wird gelöst durch Verfahren mit den Merkmalen des Anspruchs 1 sowie durch ein Eingabegerät mit den Merkmalen des Anspruchs 15.

Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Das erfindungsgemäße Verfahren dient zum Betreiben eines Eingabegeräts, insbesondere für eine Rechnereinrichtung. Wenigstens ein Eingabeelement des Eingabegeräts wird zur Durchführung einer Eingabe, insbesondere in die mit dem Eingabegerät wirkverbundene Rechnereinrichtung, wenigstens teilweise manuell betätigt. Das Eingabeelement des Eingabegeräts ist ein (wenigstens) bewegbares und insbesondere schwenkbares Eingabeelement. Das Eingabeelement des Eingabegeräts wird zur Durchführung einer Eingabe wenigstens teilweise manuell betätigt und insbesondere verschwenkt. Wenigstens eine Änderung einer Winkelstellung des Eingabeelements wird mittels wenigstens einer Sensoreinrichtung erfasst. Es wird ein Signal ausgegeben, welches wenigstens durch die Änderung der Winkelstellung des Eingabeelementes beeinflusst wird. Es wird ein Freilaufzustand des schwenkbaren Eingabeelements ab einem Startzeitpunkt simuliert. Ab dem Startzeitpunkt (danach) wird in dem Freilaufzustand ein Signal ausgegeben, welches unabhängig von der Winkelstellung des Eingabeelements ist.

Die Erfindung hat viele Vorteile. Ein erheblicher Vorteil ist, dass das Eingabeelement gar keinen tatsächlichen Freilauf bieten muss. Der Freilauf wird simuliert. Dazu wird ein Freilaufzustand gestartet.

Vorzugsweise wird der Startzeitpunkt gesetzt, wenn der Benutzer einen Startbefehl abgibt, wobei der Startbefehl insbesondere durch Drücken einer Taste oder eines Schalters oder akustisch oder optisch ausgelöst werden kann. Das kann durch Drücken einer Taste oder eines Tasters oder auch eines speziellen Schalters erfolgen. Möglich ist auch eine Spracherkennung oder eine Gestenerkennung.

Besonders bevorzugt wird der Startbefehl (automatisch) ausgelöst, wenn ein Kennwert für eine zeitliche Änderung der Winkelstellung des Eingabeelements ein vorbestimmtes Maß überschreitet. Dazu werden die zeitlichen Winkelstellungen des Eingabeelementes verglichen und daraus werden Bewegungen und/oder Beschleunigungen des Eingabeelementes ermittelt. Aus den ermittelten Bewegungsdaten wird wenigstens ein Kennwert abgeleitet. Vorzugsweise wird (kontinuierlich oder periodisch) der Kennwert abgeleitet und mit dem vorbestimmten Maß verglichen. Erreicht oder überschreitet der Kennwert das vorbestimmte Maß, wird der Startbefehl ausgelöst und es wird der Startzeitpunkt (Simulationsstartzeitpunkt) für einen Freilaufzustand festgelegt. Insbesondere wird der Startzeitpunkt (unmittelbar sofort folgend) gesetzt. Ab dem Startzeitpunkt wird ein Freilauf bzw. Freilaufzustand simuliert und praktisch so getan, als wenn das Eingabeelement über eine Freilauffunktion verfügt. Dabei ist es unerheblich, ob sich das Eingabeelement tatsächlich weiterdreht und wie lange es sich dreht. Es wird so getan, als wenn es sich weiterdrehen würde.

Mit dem Startbefehl bzw. ab dem Startzeitpunkt wird ein Freilaufzustand des drehbaren Eingabeelements simuliert. In dem Freilaufzustand wird ein Signal ausgegeben, welches unabhängig von der Winkelstellung des Eingabeelements ist.

Unter einem Schwenken wird im Sinne der vorliegenden Erfindung auch ein Drehen verstanden. Es kommt nicht darauf an, ob eine kontinuierliche Drehung möglich ist oder erfolgt.

Bei der Bestimmung des Kennwertes kann aus zeitlichen Änderungen der Winkelstellung durch Dreh- und/oder Schwenkbewegungen auf Geschwindigkeiten und Beschleunigungen rückgeschlossen werden.

In einem simulierten Freilaufzustand bzw. während der Simulation eines Freilaufzustandes hängt das ausgegebene Signal regelmäßig nicht von der Position oder Winkelstellung des Eingabeelementes ab.

Die Erfindung ermöglicht es, konventionelle Eingabegeräte mit einer "Freilauffunktion" auszurüsten. Ein einmaliges "Anschubsen" genügt, um z. B. mit einer Computermaus ein kontinuierliches Scrollen in einem Text am Bildschirm zu erzielen. Dabei kann sich das Eingabeelement weiterdrehen, muss es aber nicht. Das kann auch mit Eingabegeräten erfolgen, die nicht besonders leichtgängig sind oder die über eine feste Rasterung verfügen.

Die Erfindung kann aber natürlich auch mit leichtgängigen Eingabeelementen realisiert werden, bei denen der Freilaufzustand virtuell beliebig verlängert werden kann. Die "Simulation des Freilaufzustandes kann auch als virtuelle Freilauffunktion bezeichnet werden.

Vorzugsweise wird die Simulation des Freilaufzustandes beendet (ein Endzeitpunkt bestimmt), wenn der Benutzer eine andere Eingabe vornimmt. Diese Funktion kann einstellbar und auch konfigurierbar sein. So kann die Simulation des Freilaufzustandes nur bei bestimmten Eingaben und/oder bei Betätigung bestimmter Tasten oder bestimmter Gesten oder akustischer Befehle beendet werden.

Beispielsweise kann der Freilaufzustand selektiv bei Betätigung einer bestimmten Bedientaste, einer Maustaste, eines Schalters oder bei Drücken des Scrollrades oder einer Bedienwalze beendet werden.

Vorzugsweise wird die Simulation des Freilaufzustandes (automatisch) beendet, wenn sich das Eingabeelement nicht (mehr) dreht (und z. B. steht) und wenn der Benutzer dann das Eingabeelement beginnt zu drehen, sodass die Sensoreinrichtung eine Änderung der Winkelstellung detektiert. Das ermöglicht eine vorteilhafte Funktionsweise. Der Benutzer kann durch bestimmte Bewegungen (oder über andere Aktionen) die Simulation des Freilaufzustandes starten und durch eine (leichte) Bewegung wieder stoppen.

In vorteilhaften Ausgestaltungen wird die Simulation des Freilaufzustandes beendet, wenn die Geschwindigkeit des Eingabeelements (durch den Benutzer) aktiv verändert und das Eingabeelement abgebremst oder beschleunigt wird.

Insbesondere wird die Simulation des Freilaufzustandes beendet, wenn sich das Eingabeelement (noch) dreht und der Benutzer die Geschwindigkeit des Eingabeelements aktiv verändert und das Eingabeelement abbremst oder beschleunigt. Dabei erfolgt vorzugsweise ein Vergleich mit Erfahrungswerten. Wenn sich eine Bewegungsgeschwindigkeit des Eingabeelements in dem erwarteten Umfang zeitlich (aufgrund von Reibung) reduziert, erfolgt keine Reaktion. Wenn hingegen eine Beschleunigung oder ein Abbremsen über das erwartete Maß hinaus erfolgt, wird der Endzeitpunkt bestimmt und die Simulation beendet.

Vorzugsweise wird in dem Freilaufzustand bzw. während der Simulation des Freilaufzustandes ein Signal ausgegeben, welches unabhängig von der zeitlichen Änderung der Winkelstellung des Eingabeelements während des Freilaufzustandes ist. Es wird vorzugsweise so getan, als wenn es sich weiterdrehen würde.

In bevorzugten Weiterbildungen umfasst das Signal wenigstens einen Parameter. Wenigstens eine Parameter kann aus einer Gruppe von Parametern entnommen sein, welche Gruppe (bzw. wobei die Gruppe) eine aktuelle Winkelstellung, eine aktuelle Drehgeschwindigkeit und eine aktuelle Winkelbeschleunigung und einen aktuellen Zeitpunkt und weitere direkt erfasste oder abgeleitete Werte und dergleichen mehr umfasst. Die Berücksichtigung und Übergabe mehrerer Parameter oder Werte erlaubt eine besonders feingliedrige und genaue Steuerung. Das Signal kann digital und/oder analog sein. Als weiterer Wert kann hier zum Beispiel auch eine aktuelle Änderung der Beschleunigung (Ruck) erfasst werden.

Vorzugsweise hängt das Signal von der Geschwindigkeit des Eingabeelements beim Überschreiten des vorbestimmten Maßes und/oder von der Beschleunigung des Eingabeelements beim Überschreiten des vorbestimmten Maßes ab.

In bevorzugten Weiterbildungen wird der Kennwert aus einer Geschwindigkeit und/oder einer Beschleunigung des Eingabeelementes abgeleitet. Darüber hinaus kann der Kennwert auch aus einer Winkelstellung und/oder auch aus einer Änderung der Beschleunigung und/oder anderen (Bewegungs-)Parametern abgeleitet werden.

Vorzugsweise wird das Verhalten des Benutzers durch künstliche Intelligenz ausgewertet. Insbesondere wird das Signal in dem Freilaufzustand in Abhängigkeit von der Auswertung der künstlichen Intelligenz eingestellt. Das Eingabegerät kann so praktisch selbst (oder über den damit verbundenen Computer) lernen: Die Software merkt sich dann insbesondere Bewegungsmuster des Eingabeelements und nutzt diese zur vorteilhaft internen Ableitung insbesondere von Steuerungsstrukturen und Befehlen (künstliche Intelligenz)

Es ist bevorzugt, dass das Signal nach dem Startzeitpunkt größer ist als das Signal zu dem Zeitpunkt, an dem der Kennwert (für eine zeitliche Änderung der Winkelstellung des Eingabeelements) ein vorbestimmtes Maß überschreitet. Das bedeutet auch, dass das Signal größer als bei der maximalen Drehgeschwindigkeit des Eingabeelements sein kann. Möglich ist es auch, dass das Signal größer ist als bei der maximal physikalisch oder ergonomisch möglichen Drehgeschwindigkeit. Das ist insbesondere beim Scrollen durch (sehr) lange Listen oder Dokumente vorteilhaft.

Eine Höhe des Signals, die unmittelbar nach dem Startzeitpunkt oder bei dem Startbefehl gesetzt wird, kann von der Länge eines Dokumentes und/oder der Anzahl der Listeneinträge in einer Liste und/oder der Anzahl der Menüeinträge eines Menüs und/oder einem (noch verbleibenden) Verfahrweg abhängen. Insbesondere wird das Signal größer (und die Scrollgeschwindigkeit größer), wenn die Länge des Dokumentes, der Liste etc. größer ist.

Das Signal kann mit abnehmender Restlänge oder mit abnehmender Anzahl der weiteren Listeneinträge auch kleiner werden. So kann auf den letzten 5%, 10% oder 20% die Scrollgeschwindigkeit reduziert werden.

In allen Ausgestaltungen und Weiterbildungen ist das Eingabeelement wenigstens einen (kleinen) Winkelbereich schwenkbar. Insbesondere kann das Eingabeelement wenigstens eine halbe oder nahezu eine ganze Umdrehung verschwenkt werden. Möglich und bevorzugt ist es auch, dass das Eingabeelement mehr als eine Umdrehung oder auch mehrere Umdrehungen gedreht werden kann. Besonders bevorzugt kann das Eingabeelement kontinuierlich gedreht werden.

In allen Ausgestaltungen kann das Signal von der Zeitdauer ab dem Startzeitpunkt abhängen. Insbesondere kann während des Freilaufzustandes eine zeitliche Abnahme der Geschwindigkeit des Eingabeelements simuliert werden. Eine solche Abnahme kann linear oder in Stufen erfolgen. Die zugehörigen Werte können linear oder exponentiell oder auf eine andere geeignete Weise reduziert werden. Insbesondere ist so auch eine Simulation eines Verlaufes möglich, wie es sich bei einem tatsächlich vorhandenen Freilauf ergeben würde, bei dem in der Realität aufgrund von Reibung die Rotationsgeschwindigkeit mit der Zeit abnimmt und das Eingabeelement nach einer bestimmten Zeit stehen bleibt. Darüber hinaus kann ein bzw. das Signal auch von einer Bewegungsrichtung (z.B. vor-/zurück) und/oder einer (Anfangs-)Geschwindigkeit und/oder einer (Anfangs-)Beschleunigung abhängig sein. Außerdem kann während des Freilaufzustands vorzugsweise auch eine Zunahme oder auch eine andere Abhängigkeit, wie z. B. eine periodische Schwankung der Geschwindigkeit des Eingabeelements simuliert werden. Vorzugsweise wird eine (zeitliche) Länge des Freilaufzustandes begrenzt.

Vorzugsweise kann wenigstens eine Bewegbarkeit des Eingabeelements mittels wenigstens einer steuerbaren magnetorheologischen Bremseinrichtung gezielt verzögert (also vorzugsweise gebremst und insbesondere gedämpft) und/oder festgehalten und insbesondere blockiert und/oder freigegeben werden. Dabei wird die Bewegbarkeit des Eingabeelements insbesondere mittels wenigstens einer Steuereinrichtung und/oder insbesondere durch die Rechnereinrichtung wenigstens in Abhängigkeit wenigstens einer in der Rechnereinrichtung und/oder in dem Eingabegerät hinterlegten Eingabebedingung gezielt angepasst. Insbesondere erfolgt die Anpassung der Bewegbarkeit des Eingabeelements mittels einer Ansteuerung der Bremseinrichtung. Die Eingabebedingung umfasst insbesondere einen Bewegungsparameter des Eingabeelements.

Festhalten im Sinne dieser Anmeldung umfasst insbesondere eine sehr große Verzögerung der Bewegbarkeit des Eingabeelements, welche nur mit großem Kraftaufwand des Bedieners überwunden werden kann. Demgegenüber ist ein blockiertes Eingabeelement (praktisch) nicht mehr durch den Benutzer bewegbar.

Die Bewegbarkeit des Eingabeelements kann wenigstens in Abhängigkeit wenigstens einer Eingabebedingung gezielt angepasst werden, wobei die Eingabebedingung wenigstens einen Bewegungsparameter umfasst.

Insbesondere umfasst der Bewegungsparameter die Eingabebedingung wenigstens eine Richtung und/oder eine Geschwindigkeit und/oder eine Beschleunigung und/oder eine Änderung der Beschleunigung der Bewegung des Eingabeelements. Außerdem kann vorzugsweise auch eine Winkelposition durch den Bewegungsparameter umfasst sein.

Die Bewegung kann dabei eine lineare Bewegung, eine Schwenkbewegung und/oder auch eine Drehbewegung sein. Es ist zusätzlich möglich, dass eine Bewegungsposition, wie ein Dreh- und/oder Schwenkwinkel gezielt als Eingabebedingung genutzt wird.

Besonders vorteilhaft ist die Anpassung der Bewegbarkeit des Eingabeelements in Abhängigkeit der Eingabebedingung. Dadurch kann der Benutzer bei der Arbeit mit dem Eingabegerät gezielt unterstützt werden. Zudem wird die Benutzung des Eingabegeräts erheblich komfortabler und die Durchführung von Eingaben wird intuitiver gestaltet. Zum Beispiel können so eine Verbesserung der Produktivität und eine Verringerung der Fehlerhäufigkeit beim Benutzer erzielt werden. Insbesondere die Nutzung des Bewegungsparameters ermöglicht vorteilhaft ein haptisches Feedback an den Benutzer. Der Benutzer erhält das Feedback direkt aufgrund seiner Eingabe und/oder Bewegung. Eine optische Kontrolle der Eingabe an dem Bediengerät ist nicht notwendig. Vorteilhaft kann der Benutzer direkt fühlen, wie die Eingabe insbesondere durch eine angeschlossene Rechnereinrichtung verarbeitet wird. Menschen mit Diabetes können eine stark reduzierte Berührungsempfindlichkeit in der Haut z.B. in den Fingern haben, wodurch das Steuern einer Touchfläche (touchsensitiven Oberfläche, wie z.B. dem Volumenslider) schwierig bis unmöglich wird. Ein haptisches Feedback wird sehr wohl wahr genommen. Darüber hinaus können die Eingabebedingungen auch direkt auf dem Eingabegerät in einer Speichereinheit oder durch eine in dem Eingabegerät angeordnete Rechnereinrichtung gespeichert und/oder abgelegt werden. So können die Eingabebedingungen direkt in dem Gerät des Benutzers abgelegt werden.

Ein besonderer Vorteil solcher Weiterbildungen besteht auch darin, dass eine zusätzliche Dimension geboten wird, in der die Bewegbarkeit des Eingabeelements angepasst werden kann. Eine erste grundlegende Dimension, in der die Bewegbarkeit des Eingabeelements angepasst werden kann, ist beispielsweise aus der WO 2018/215350 A1 bekannt. Dort ist die Anpassung der Bewegbarkeit des Eingabeelements in Abhängigkeit des Drehwinkels beschrieben, sodass in bestimmten Abständen Rasterpunkte auftreten und spürbar sind (haptisches Feedback). Durch die Erfindung ist es nun möglich, diese Dimension mit einer weiteren Dimension eines haptisches Feedbacks zu überlagern. Beispielsweise kann die Bewegbarkeit des Eingabeelements stärker gebremst oder sogar blockiert werden (zweite Dimension), wenn der Benutzer das Bedienelement zwischen zwei Rasterpunkten (erste Dimension) zu schnell dreht oder zu stark beschleunigt oder plötzlich die Richtung ändert.

Insbesondere dient das Verfahren zum Betreiben einer Computermaus. Das Verfahren kann auch zum Betreiben eines Drehknopfs und/oder eines Scrollrads und/oder einer Daumenwalze und/oder eines Joysticks und/oder einer haptischen Telefonhülle und/oder eines Smart Device und/oder eines anderen Eingabegeräts Der Bedienung von technischen Einrichtungen in Fahrzeugen, (als Drehsteller; Dreh-/Drücksteller; für das Infotainment, die Klimaanlage, als Getriebewahlschalter, für die Navigation, zur Sitzverstellung, in der Lenkung oder im Lenkrad, zur Bedienung der Fahrwerksverstellung, Fahrmodiverstellung, Distanzeinstellung, Adaptive Cruise Control, Anhängersteuerung...), Kraftfahrzeugen, Luftfahrt- und Flugzeugen, Schiffen, Booten, in der Landtechnik (Traktoren, Mähdrescher, Erntemaschinen, sonstigen Feldmaschinen für die Landwirtschaft, Pistengeräte...), Baumaschinen und Maschinen für das Material Handling (Gabelstapler ...), Bearbeitungsmaschinen und -anlagen in der Industrie oder bei medizinischen oder industriellen Anlagen eingesetzt dienen.

Die Erfindung kann auch bei der Bedienung oder als Eingabegerät von/für Waschmaschinen, Küchen-/Haushaltsgeräten und -einrichtungen, Radios, Fotoapparaten und Filmkameras, VR (Virtual-Reality) und AI (Artificial Intelligence) Devices, Hi-Fi- und Fernsehanlagen, Smart Devices, Smart-Home-Geräten, Laptops, PCs, Smartwatches, in einem Kronenrad von Armbanduhren oder als Eingabegerät für Computer oder als Computermaus oder als Drehrad in einer Computermaus oder Controllern, Spielkonsolen, Gamingequipment, Drehknopf in einer Tastatur oder anderen Geräten verwendet werden.

Als Rechnereinrichtung kann ein Computer oder ein mobiles Endgerät dienen, an welche das Eingabegerät angeschlossen ist. Die Rechnereinrichtung kann auch Teil eines anderen Geräts oder einer Maschine oder eines Fahrzeugs sein. Zum Beispiel ist das Eingabegerät dann eine Daumenwalze im Lenkrad eines Fahrzeugs. Insbesondere umfasst die Rechnereinrichtung wenigstens eine Anzeigeeinrichtung. Das Eingabegerät stellt insbesondere eine Mensch-Maschine-Schnittstelle (HID) bereit oder ist Teil einer solchen. Insbesondere umfasst die Rechnereinrichtung wenigstens eine grafische Benutzerschnittstelle (GUI) und beispielsweise einen Monitor oder ein Display oder dergleichen. Insbesondere werden auf der grafischen Benutzerschnittstelle Informationen und zum Beispiel eine vorgenommene Eingabe oder die Auswirkungen einer vorgenommenen Eingabe grafisch dargestellt.

Die in der Rechnereinrichtung hinterlegte Eingabebedingung kann fest hinterlegt sein. Die in der Rechnereinrichtung hinterlegte Eingabebedingung kann auch dynamisch bestimmt werden, beispielsweise in Abhängigkeit eines Programms oder Menüs. Die Eingabebedingung kann auch dynamisch in Abhängigkeit der Eingabe angepasst werden, sodass eine gegenseitige Rückkopplung bzw. Abhängigkeit vorliegt.

Vorzugsweise erfolgt eine bidirektionale Kommunikation zwischen der Rechnereinrichtung und dem Eingabegerät. Insbesondere ist das Eingabegerät durch die Rechnereinrichtung ansteuerbar und vorzugsweise umgekehrt. Insbesondere kann die Rechnereinrichtung die Bremseinrichtung ansteuern und vorzugsweise die Bremswirkung einstellen. Dazu ist in der Rechnereinrichtung insbesondere wenigstens ein Algorithmus und beispielsweise eine Software oder ein Treiber oder dergleichen hinterlegt.

Unter einer manuellen Betätigung des Eingabegeräts wird insbesondere eine beliebige wenigstens teilweise muskelkraftbetriebene Betätigung verstanden. Dabei kann auch eine Bedienung mit dem Fuß oder mit dem Kopf vorgesehen sein.

Im Rahmen der vorliegenden Erfindung wird unter einer Verzögerung insbesondere ein Bremsen und besonders bevorzugt auch eine Dämpfung verstanden. Unter einem Freigeben bzw. einer Freigabe werden insbesondere eine wenigstens teilweise Verringerung der Verzögerung und insbesondere eine Aufhebung der Verzögerung verstanden. Bei einer vollständigen Freigabe der Bewegbarkeit des Eingabeelements ist die Bremseinrichtung insbesondere inaktiv. Vorzugsweise wird bei einer Freigabe ein magnetorheologisches Medium nicht durch ein von der Bremseinrichtung aktiv erzeugtes magnetisches Feld beeinflusst. Bei einer vollständigen Freigabe ist das Eingabeelement insbesondere frei bewegbar und beispielsweise frei drehbar. Neben einer Drehbewegung kann für das Eingabeelement auch eine Druckbetätigung und/oder Zugbetätigung vorgesehen sein.

Das Verfahren kann auch mit Eingabegeräten durchgeführt werden, bei denen das Eingabeelement über wenigstens zwei Freiheitsgrade verfügt. Die Bewegbarkeit des Eingabeelements entlang eines ersten Freiheitsgrads wird mittels einer magnetorheologischen Bremseinrichtung gezielt blockiert und/oder insbesondere festgehalten, während das Eingabeelement zur Eingabe entlang des zweiten Freiheitsgrads betätigt wird und/oder nachdem das Eingabeelement zur Eingabe entlang des zweiten Freiheitsgrads betätigt wurde.

Insbesondere wird eine Drehbarkeit des Eingabeelement mittels der Bremseinrichtung blockiert, während das Eingabeelement entlang des zweiten Freiheitsgrads gedrückt und/oder gezogen wird. Das bietet z. B. den besonderen Vorteil, dass während des Drückens bzw. Ziehens (sog. Push-Funktion bzw. Pull-Funktion) keine versehentliche Eingabe durch Drehen erfolgt. Beispielsweise wird mit dem Drücken oder Ziehen eine Eingabe bestätigt, welche zuvor durch Drehen aus einem Menü ausgewählt wurde. Würde nun während des Drückens bzw. Ziehens aus Versehen an dem Eingabeelement gedreht, könnte ein falscher Menüpunkt bestätigt werden. Zusätzlich oder alternativ kann die Drehbarkeit des Eingabeelement mittels der Bremseinrichtung blockiert werden, wenn zuvor ein Drücken auf das Eingabeelement und/oder wenn zuvor ein Ziehen an dem Eingabeelement erfolgt ist. Dann können im Anschluss keine unerwünschten Eingaben erfolgen. Insbesondere wird die Blockierung durch ein erneutes Bewegen des Eingabeelements entlang des zweiten Freiheitsgrads wieder aufgehoben. Die Blockierung kann auch nach einer definierten Zeit automatisch aufgehoben werden.

Insbesondere wird eine Schwenkbewegung entlang des ersten Freiheitsgrads durch eine Linearbewegung entlang des zweiten Freiheitsgrads blockiert. Hierzu wird das Eingabeelement bevorzugt gezielt gedrückt und/oder gezogen und/oder um einen Schwenkpunkt verschwenkt, welcher außerhalb des Eingabegeräts selbst liegt. Insbesondere erfolgt die Linearbewegung quer zur Drehachse.

Unter einem Drücken und/oder Ziehen wird hierbei insbesondere die Betätigung wenigstens eines Knopfes und/oder Schalters und/oder eines Schaltmechanismus verstanden, welcher durch Drücken, Ziehen, Schwenken und oder Drehen betätigbar ist. Die Betätigung kann dabei insbesondere durch zusätzliche Sensoren detektiert werden.

Vorteilhaft wird so eine zweite und/oder andere parallele Benutzereingabe gezielt unterdrückt. Dies ist vor allem vorteilhaft, wenn eine Eingabe isoliert von anderen Eingaben, wie Dreh- und/oder Schwenkbewegungen, erfolgen soll.

In Weiterbildungen kann das Verfahren auch mit Eingabegeräten durchgeführt werden, bei denen die Bewegbarkeit des Eingabeelements insbesondere mittels einer magnetorheologischen Bremseinrichtung gezielt verzögert, festgehalten und insbesondere blockiert und freigegeben wird und bei denen die Bewegbarkeit des Eingabeelements wenigstens in Abhängigkeit eines Profils vorgegeben und/oder beeinflusst wird. Das Profil umfasst beispielsweise wenigstens zwei, drei, vier, fünf, zehn, zwanzig, fünfzig, hundert oder mehr voneinander wenigstens teilweise abhängige oder unabhängige Eingabebedingungen. Das Profil wird dabei insbesondere wenigstens teilweise durch einen Benutzer vorgegeben.

Vorteilhaft wird eine Bewegbarkeit des Eingabeelements so gleichzeitig in Abhängigkeit von wenigstens zwei Eingabebedingungen gesteuert. Vorteilhaft kann das Profil eine Mehrzahl oder auch eine Vielzahl an Eingabebedingungen aufweisen. Insbesondere enthält ein Profil alle notwendigen Eingabebedingungen zur Steuerung einer angeschlossenen Rechnereinrichtung. Vorteilhaft können die Profile leicht ausgetauscht werden. Darüber hinaus ist es auch möglich, dass die Eingabebedingungen des Profils zusammen und in Abhängigkeit zueinander anpassbar und adaptierbar sind. Durch das Profil wird eine Übertragung von Eingabebedingungen zur Steuerung der magnetorheologischen Bremseinrichtung ermöglicht. So können beispielsweise Spielprofile für angeschlossene Rechnereinrichtungen angepasst und zwischen verschiedenen Rechnereinrichtungen übertragen werden. Dabei kann ein Profil beispielsweise die Stärke und/oder die Intensität der Verzögerung der Bewegung des Eingabegeräts zur Veränderung der Bremswirkung der magnetorheologischen Bremseinrichtung gezielt beeinflussen.

Besonders vorteilhaft können die Eingabebedingungen des Profils durch wenigstens eine Benutzeroberfläche mittels einer Rechnereinrichtung individuell angepasst werden. So ist es beispielsweise möglich aus einer Vielzahl an vorgegebenen Profilen auszuwählen und diese an weiter an die individuellen Bedürfnisse anzupassen. Hier erfolgt die Anpassung insbesondere in Abhängigkeit der Bewegungsparameter des Eingabeelements.

In wenigstens einer vorteilhaften Ausgestaltung wird innerhalb eines Bewegungsbereichs des Eingabeelements eine Rasterung mit Anschlagpunkten durch die Bremseinrichtung erzeugt, welche die Bewegbarkeit und eine Bewegung des Eingabeelements beeinflusst. Durch die Rasterung mit den Anschlagpunkten wird vorteilhaft eine Rückmeldung für den Benutzer über die vorgenommene Bewegung ermöglicht.

In wenigstens einer vorteilhaften Weiterbildung wird ein Abstand von wenigstens zwei innerhalb der Rasterung nebeneinanderliegenden Anschlagpunkten wenigstens teilweise in Abhängigkeit des Bewegungsparameters der Bewegung des Eingabeelements verändert. Vorteilhaft wird so ein verbessertes Feedback für einen Benutzer des Eingabeelements des Eingabegeräts ermöglicht. Es ist außerdem möglich, dass sich die Rasterung selbst in Abhängigkeit des Bewegungsparameters einer Bewegung verändert.

Vorzugsweise wird wenigstens ein Anschlagpunkt in Abhängigkeit des Bewegungsparameters der Bewegung des Eingabeelements übersprungen und/oder ausgelassen. Außerdem ist es möglich, dass einzelne Anschlagpunkte in Abhängigkeit einer Position des Eingabeelements ausgelassen und/oder übersprungen werden. So können vorteilhaft beispielsweise schnelle Bewegungen ohne störende Anschlagpunkte für den Benutzer ausgeführt werden. Eine vorteilhafte Bedienung wird ermöglicht. Außerdem ist es möglich, dass Anschlagpunkte in einer Bewegungsrichtung für den Benutzer spürbar sind. Dadurch erhält der Benutzer vorteilhaft eine Rückmeldung beispielsweise, falls eine Eingabe richtungsabhängig veränderlich sein soll. Außerdem ist es so möglich, dass eine Rasterung nur bei geringen Beschleunigungen für den Benutzer merkbar ist.

In wenigstens einer vorteilhaften Ausgestaltung weist die Rasterung zwischen 3 und 200 Anschlagpunkte auf. Vorteilhaft weist die Rasterung insbesondere zwischen 5 und 100 Anschlagpunkte auf.

Vorzugsweise wird bei einem Überwischen von Programmelementen (sogenanntes Mouseover) die Bewegbarkeit des Eingabeelements in Abhängigkeit eines Typs des überwischten Programmelements und/oder in Abhängigkeit einer Eingabebedingung für das überwischte Programmelement eingestellt.

In einer vorteilhaften Ausgestaltung wird das Eingabeelement zum Scrollen eingesetzt und vorzugsweise verwendet. Dabei wird die Bewegbarkeit des Eingabeelements vorzugsweise in Abhängigkeit des Scrollens eingestellt und verändert und insbesondere in Abhängigkeit der jeweils aktuell angezeigten Seiteninformationen und/oder anderer angezeigter Informationen eingestellt. Das Scrollen erfolgt insbesondere mittels einer Drehbewegung des Eingabeelements. Vorzugsweise ist das Eingabeelement dabei als ein Eingaberad ausgebildet. Das Eingaberad ist insbesondere eine Fingerwalze oder Daumenwalze oder umfasst wenigstens eine solche.

Die Bewegbarkeit des Eingabeelements wird insbesondere verzögert (insbesondere gedämpft) oder festgehalten und insbesondere blockiert, wenn die aktuell angezeigten Seiteninformationen eine zuvor gesetzte Markierung und/oder einen gesuchten Suchbegriff und/oder einen Benutzerhinweis umfassen. Der Benutzerhinweis kann beispielsweise eine Eingabeaufforderung und/oder eine Warnung oder dergleichen umfassen.

In einer vorteilhaften Ausgestaltung wird das Eingabeelement zur Tabellenkalkulation eingesetzt und vorzugsweise verwendet. Dabei wird die Bewegbarkeit des Eingabeelements vorzugsweise in Abhängigkeit wenigstens eines Parameters der Zellen der Tabelle, vorzugsweise des Inhalts der Zellen, eingestellt. Der Parameter kann auch die Position der Zellen der Tabelle betreffen.

Insbesondere wird die Bewegbarkeit des Eingabeelements beim Scrollen durch eine Tabelle in Abhängigkeit einer dargestellten Zellenhöhe und/oder Zellenbreite und/oder einer tatsächlichen Zellenhöhe und/oder Zellenbreite verzögert und freigegeben. Dabei ist vorgesehen, dass eine mit der Zellenhöhe und/oder Zellenbreite korrespondierende Rasterung für das Scrollen eingestellt wird. Insbesondere wird die Drehbewegung des Eingabeelements gerastert. In allen Ausgestaltungen erfolgt die Rasterung insbesondere durch magnetorheologisches Erzeugen von Anschlagpunkten. Insbesondere erfolgt die Rasterung durch ein gezieltes Verzögern oder Blockieren und ein gezieltes Freigeben der Bewegung in bestimmten zeitlichen Abständen und/oder in bestimmten Drehwinkeln.

Es ist bevorzugt und vorteilhaft, dass die Bewegbarkeit des Eingabeelements in Abhängigkeit einer Aktivität eines im Hintergrund laufenden Programms und/oder in Abhängigkeit eines Betriebszustands eines Betriebssystems der Rechnereinrichtung eingestellt wird. Beispielsweise kann die Bewegbarkeit verzögert oder festgehalten und insbesondere blockiert werden, wenn das Programm im Hintergrund oder das Betriebssystem einen Benutzerhinweis und beispielsweise eine Eingabeaufforderung und/oder eine Warnung ausgeben.

Vorteilhaft und bevorzugt ist auch, dass die Bewegbarkeit des Eingabeelements in Abhängigkeit eines Zoomvorgangs eingestellt wird. Insbesondere wird für ein Hereinzoomen eine andere Verzögerung als für ein Herauszoomen eingestellt. Beispielsweise erfolgt für das Hereinzoomen einer höhere Verzögerung als für das Herauszoomen oder umgekehrt. Vorteilhaft erfolgt das Hereinzoomen entlang einer Bewegungsrichtung mit einer Verzögerung. Dabei erfolgt ein Herauszoomen vorteilhaft in eine entgegengesetzte Bewegungsrichtung mit einer anderen Verzögerung als für das Hereinzoomen. Vorteilhaft erhält der Benutzer direkt ein haptisches Feedback über den Zoomvorgang.

In einer besonders vorteilhaften und bevorzugten Ausgestaltung wird das Eingabeelement bei einem Konstruktionsprogramm eingesetzt und vorzugsweise verwendet. Dabei ist bevorzugt, dass die Bewegbarkeit des Eingabeelements in Abhängigkeit einer Größe und/oder einer Priorität eines mittels des Eingabegeräts bearbeiteten und z. B. bewegten Bauteils eingestellt wird.

Es ist möglich und vorteilhaft, dass bei einer Eingabe in wenigstens ein Eingabemenü mit inaktiven und aktiven Eingabefeldern die Bewegbarkeit des Eingabeelements in Abhängigkeit davon eingestellt wird, ob das Eingabefeld inaktiv oder aktiv ist. Beispielsweise ist die Bewegbarkeit bei inaktiven Eingabefeldern blockiert oder wenigstens teilweise verzögert.

Es ist möglich und bevorzugt, dass die Bewegbarkeit des Eingabeelements gezielt verändert wird, um eine haptische Bestätigung einer zuvor erfolgten Eingabe bereitzustellen. Eine solche Bestätigung bzw. ein solches Feedback kann mit der Erfindung viel leiser und gezielter als beispielsweise mit einer mechanisch gerasterten Maus erfolgen. Zudem können mit der Erfindung viele unterschiedliche Bestätigungen durch entsprechendes Anpassen der Bewegbarkeit erfolgen. Beispielsweise erfolgt die Bestätigung durch ein Vibrieren und/oder Rattern des Eingabeelements.

In Dieser Anmeldung wird unter einem Rattern insbesondere ein abwechselndes Blockieren und Freigeben der Bewegbarkeit des Eingabeelements während einer Eingabe bzw. während einer Bewegung verstanden. Das Blockieren und Freigeben erfolgt dabei mit einer hohen Frequenz. Beim Vibrieren kann eine höhere Frequenz als beim Rattern vorgesehen sein. Beispielsweise ist eine Frequenz von wenigstens 10 Hz oder wenigstens 50 Hz oder wenigstens 100 Hz oder mehr vorgesehen. Dabei kann vorgesehen sein, dass je nach Höhe der Frequenz unterschiedliche Arten von Bestätigungen bereitgestellt werden.

Vorzugsweise wird bei einer falschen und/oder unplausiblen und/oder kritischen Eingabe die Bewegbarkeit des Eingabeelements verzögert oder festgehalten und insbesondere blockiert. Eine solche Eingabe kann auch mit der zuvor beschriebenen Bestätigung quittiert werden, beispielsweise durch Vibrieren und/oder Rattern. Solche Ausgestaltungen sind besonders bei sensiblen Eingaben oder auch bei medizinischen Geräten vorteilhaft. Dadurch können gefährliche Vorgänge und zum Beispiel kritische Maschinenbewegungen oder Roboterbewegungen unterbunden oder dem Benutzer haptisch angezeigt werden.

In einer vorteilhaften Ausgestaltung ist vorgesehen, dass nach einer Eingabe die Bewegbarkeit des Eingabeelements so lange verzögert oder blockiert wird, bis wenigstens eine weitere Benutzereingabe erfolgt ist. Die weitere Benutzereingabe erfolgt insbesondere durch eine andere Eingabe als die verzögerte bzw. festgehaltene und insbesondere blockierte Bewegbarkeit des Eingabeelements. Beispielsweise kann ein Ziehen oder Drücken des Eingabeelements vorgesehen sein, wenn die Drehbarkeit verzögert oder festgehalten und insbesondere blockiert ist. Möglich ist auch, dass die weitere Benutzereingabe mittels eines anderen Eingabegeräts erfolgt. Die weitere Benutzereingabe kann beispielsweise eine Bestätigung einer besonders wichtigen oder kritischen Eingabe betreffen.

In einer ebenfalls vorteilhaften und bevorzugten Ausgestaltung wird das Eingabegerät beim Gaming (Computerspielen) eingesetzt und insbesondere verwendet. Dabei ist bevorzugt, dass die Bewegbarkeit des Eingabeelements in Abhängigkeit eines mittels der Rechnereinrichtung erzeugten Szenarios eingestellt wird. Vorzugsweise wird die Bewegbarkeit des Eingabeelements umso stärker verzögert, desto höher eine im Szenario fiktiv aufzubringende Kraft und/oder desto schwieriger eine im Szenario fiktiv vorzunehmende Handlung ist. Vorteilhaft wird die Verzögerung kontinuierlich und in Echtzeit in Abhängigkeit der Eingabebedingung und insbesondere des Bewegungsparameters beeinflusst.

In allen Ausgestaltungen ist es möglich, dass die Bewegbarkeit und vorzugsweise eine Rasterung der Drehbarkeit des Eingabeelements durch wenigstens eine Benutzereingabe angepasst werden kann. Vorzugsweise wird die vorgenommene Anpassung in der Rechnereinrichtung und/oder in dem Eingabegerät hinterlegt. Beispielsweise kann die im Normalfall vorgesehene Rasterung vergröbert und/oder verfeinert werden. Es kann auch eine maximale Verzögerung der Bewegbarkeit einstellbar sein. Insbesondere kann eine solche Anpassung spezifisch für ein jeweiliges Programm erfolgen.

In einer besonders vorteilhaften und bevorzugten Weiterbildung umfasst das Eingabeelement wenigstens ein Eingaberad. Das Eingaberad ist insbesondere als ein Mausrad insbesondere einer Computermaus ausgebildet. Dabei erfolgt die Eingabe vorzugsweise wenigstens durch Drehen des Eingaberads. Vorzugsweise kann die Drehbarkeit des Eingaberads mittels der Bremseinrichtung gezielt verzögert, insbesondere gedämpft, und festgehalten und insbesondere blockiert und freigegeben werden. Vorzugsweise weist das Eingabeelement, insbesondere das Eingaberad, auch wenigstens eine axiale Bewegbarkeit auf. Beispielsweise kann ein Drücken und/oder Ziehen des Eingabeelements und vorzugsweise des Eingaberads vorgesehen sein.

In allen möglichen Ausgestaltungen ist es besonders bevorzugt, dass die Bewegbarkeit des Eingabeelements von frei bewegbar bis vollständig blockiert eingestellt werden kann bzw. wird. Dabei ist die Bewegbarkeit bzw. Drehbarkeit im Rahmen der vorliegenden Erfindung vollständig blockiert, wenn eine Bewegung bzw. Drehung durch eine bei einer betriebsgemäßen Verwendung des Eingabegeräts manuell erzeugbare Kraft nicht möglich ist. Insbesondere ist die Bremseinrichtung dazu geeignet und ausgebildet, ein Verzögerungsmoment zwischen 0,001 Nm (Grundmoment ohne Verzögerung) und 0,02 Nm (Maximalverzögerung), insbesondere bei Mausradanwendungen, aufzubringen. Darüber hinaus es bei anderen Anwendungsgebieten auch möglich, Verzögerungsmomente von wenigstens bis zu 0,5 Nm und vorzugsweise von wenigstens 2 Nm oder auch wenigstens 3 Nm aufzubringen. Das Grundmoment und die maximale Verzögerung sind dabei vorteilhaft insbesondere von der Bauform des Eingabegeräts und der magnetorheologischen Bremseinrichtung abhängig.

Es ist bevorzugt, dass die Bewegbarkeit des Eingabeelements und insbesondere die Drehbarkeit des Eingaberads zwischen frei drehbar und festgehalten und insbesondere blockiert mit einer Frequenz von wenigstens 10 Hz und vorzugsweise wenigstens 50 Hz umgeschaltet werden kann bzw. wird. Möglich ist auch eine Frequenz von wenigstens 20 Hz oder wenigstens 30 Hz oder wenigstens 40 Hz. Es kann auch eine Frequenz von wenigstens 60 Hz oder wenigstens 80 Hz oder wenigstens 100 Hz oder so 1 kHz oder eine noch höhere Frequenz vorgesehen sein. Möglich sind auch Frequenzen von wenigstens 120 Hz oder wenigstens 200 Hz oder mehr.

Für die Drehbarkeit des Eingaberads können insbesondere wenigstens 50 Anschlagpunkte und vorzugsweise wenigstens 100 Anschlagpunkte für jeweils eine Umdrehung eingestellt werden. Möglich sind auch wenigstens 150 oder wenigstens 200 oder wenigstens 250 oder wenigstens 300 Anschlagpunkte. Es können auch wenigstens 350 oder wenigstens 400 Anschlagpunkte vorgesehen sein. Der zwischen zwei Anschlagpunkten minimal einstellbare Drehwinkel beträgt insbesondere maximal 10° und vorzugsweise maximal 5° und besonders bevorzugt maximal 2°. Der minimal einstellbare Drehwinkel zwischen zwei Anschlagpunkten kann auch maximal 1° oder maximal 0,5° oder maximal 0,1° aufweisen.

Vorzugsweise wird die Anzahl der Anschlagpunkte in Abhängigkeit einer Anzahl von vorgesehenen Eingabeoptionen eingestellt. Beispielsweise wird die Anzahl der Anschlagpunkte in Abhängigkeit von Auswahloptionen, Menüoptionen und/oder einer Anzahl von Seiten oder Reitern oder dergleichen eingestellt. Dabei wird ein Anschlagpunkt insbesondere dadurch bereitgestellt, dass die Drehbarkeit des Eingaberads wenigstens zeitweise gezielt verzögert und insbesondere blockiert wird und anschließend wieder freigegeben wird.

In wenigstens einer vorteilhaften Weiterbildung wird als Warnsignal eine Vibration, d. h. insbesondere ein Rippel (Vibrieren) durch die magnetorheologische Bremseinrichtung mit einer Frequenz von mehr als 100 Hz erzeugt, sodass eine haptische Wahrnehmung und ein wahrnehmbarer Ton durch die magnetorheologische Bremseinrichtung erzeugt werden. Dabei wechseln der Stromfluss und/oder die Spannung zwischen einem positiven (Maximal-) Wert, einem Nullwert und einem negativen (Maximal-) Wert. Vorteilhaft kann die Frequenz des Warnsignals zwischen 50 Hz und 2 kHz oder noch höher bis zu 20 kHz liegen. Dabei wird der Stromfluss in der magnetorheologischen Bremseinrichtung, insbesondere periodisch, umgekehrt, sodass die Bremsvorrichtung vibriert und die Warnung an den Benutzer weitergibt. Darüber hinaus erzeugt die Bremseinrichtung bei solch einer hohen Frequenz außerdem ein hörbares Tonsignal. Dabei kann es vorteilhaft sein, das alternierende Stromsignal und/oder Spannungssignal nicht symmetrisch um den Nullpunkt zu legen, sondern mit einem Offset zu beaufschlagen. Dadurch verändert sich insbesondere das wahrnehmbare Gefühl des Benutzers. Es werden insbesondere hörbare Frequenzen durch die Bremseinrichtung ausgegeben. Bei einer Bewegung des Eingabeelements kann die Vibration dabei beispielsweise durch einen Finger und/oder die Hand des Benutzers wahrgenommen werden. Eine durch die Bremseinrichtung erzeugte Vibration wird von einem Tragkörper des Eingabeelements bzw. der Bremseinrichtung beispielsweise an wenigstens ein Gehäuse der des Eingabegeräts, welches beispielsweise als Computermaus ausgebildet ist, weitergeleitet. So kann eine, bevorzugt für einen Menschen, akustisch wahrnehmbare Schwindung erzeugbar sein.

Praktisch ist die Erzeugung eines Tons mit dem Eingabeelement möglich. Der Ton bzw. die akustisch wahrnehmbare Schwindung kann nicht nur von der Bremseinrichtung an sich stammen, sondern von der Vibration des Gehäuses und vielen oder nahezu allen oder allen Teilen der Maus kommen.

In einer konkreten Ausgestaltung wird die Vibration von der Halterung des Mausrades bzw. der Bremse an das Gehäuse der Maus weiter geleitet. Durch die so entstehende Schwingung des Mauskörpers entsteht der akustische Klang.

Bei einem Rippel kann die Bewegbarkeit des Eingabeelements wenigstens abschnittweise blockiert sein. Darüber hinaus kann die Bewegbarkeit des Eingabeelements auch teilweise verzögert und/oder teilweise festgehalten sein. Es sind insbesondere Überlagerungen mit anderen Signalen der Bremseinrichtung möglich.

Vorzugsweise werden Spannungen zum Betrieb der magnetorheologischen Bremseinrichtung durch einen Zufallsgenerator erzeugt, sodass ein Drehmoment und insbesondere eine Magnetfeldstärke schnell zwischen verschiedenen Stärken hin und her springt. Dadurch kann die Bewegbarkeit des Eingabeelements so angepasst werden, als wäre beispielsweise Sand an oder in einer Lagerstelle vorhanden oder eine Lagerung stark verschlissen. Dabei kann der Spannungs- und Strombereich des Zufallsgenerators variiert werden. Insbesondere bei einem engen Bereich kann sich dann eine Bewegung des Eingabeelements so anfühlen, als ob eine Lagerreibung erhöht ist.

Es ist möglich und vorteilhaft, dass ein Drehwinkel zwischen den Anschlagpunkten verringert wird, wenn ein schnelleres Scrollen und/oder ein schnellerer Seitenwechsel erfolgt. Es ist möglich, dass ein Drehwinkel zwischen den Anschlagpunkten erhöht wird, wenn ein langsameres Scrollen und/oder ein langsamerer Seitenwechsel erfolgt. Möglich ist auch die umgekehrte Ausgestaltung.

Insbesondere wird der Drehwinkel des Eingaberads mittels einer Sensoreinrichtung überwacht. Die Sensoreinrichtung ist insbesondere dazu geeignet und ausgebildet, den Drehwinkel mit einer Auflösung von wenigstens 1° und vorzugsweise wenigstens 0,5° und besonders bevorzugt wenigstens 0,2° oder auch bevorzugt wenigstens 0,1° oder besser zu erfassen.

In allen Ausgestaltungen ist es besonders bevorzugt, dass die Bewegbarkeit des Eingabeelements in Echtzeit angepasst werden kann bzw. wird. Insbesondere ist die Bremseinrichtung dazu geeignet und ausgebildet, die Verzögerung innerhalb von weniger als 100 Millisekunden um wenigstens 30% zu verändern.

Insbesondere ist die Verzögerung innerhalb weniger als 10 Millisekunden um wenigstens 10%, vorzugsweise um wenigstens 30% und besonders bevorzugt um wenigstens 50%, veränderbar. Die Verzögerung kann auch innerhalb weniger als 100 Millisekunden um wenigstens 100% oder 500% oder um das Zehnfache oder Tausendfache variierbar sein. Eine solche Echtzeitsteuerung ist für die Arbeit mit dem Eingabegerät von besonders großem Vorteil.

Es ist möglich, dass die Eingabebedingung auch in Abhängigkeit der Eingabe dynamisch angepasst wird. Dadurch ist möglich, dass die Bewegbarkeit des Eingabeelements nach dem Prinzip einer Rückkopplung und insbesondere einer Regelung auch durch die vorgenommene Eingabe angepasst wird. Durch eine solche gegenseitige Abhängigkeit zwischen Eingabe und Eingabebedingung wird eine besonders vorteilhafte Anpassung der Drehbarkeit und somit eine besonders intuitive Bedienung des Eingabegeräts erreicht.

Es ist möglich und bevorzugt, dass die Steuerung der Bewegbarkeit des Eingabeelements lernfähig ausgebildet ist. Insbesondere ist dazu wenigstens ein Algorithmus des maschinellen Lernens hinterlegt. Beispielsweise werden dazu Gewohnheiten eines Benutzers in Bezug auf die Durchführung von Eingaben während der Bedienung eines Programms erkannt und in einer Speichereinrichtung hinterlegt. Beispielsweise können häufig benutzte Schaltelemente oder Menüpunkte oder dergleichen erkannt und hinterlegt werden. Dadurch kann der Benutzer bei einer erneuten Verwendung des Programms durch eine gezielte Steuerung der Bewegbarkeit des Eingabeelements unterstützt werden.

Die Bremseinrichtung umfasst insbesondere wenigstens ein feldempfindliches magnetorheologisches Medium und wenigstens eine Felderzeugungseinrichtung zur Erzeugung und Steuerung einer Feldstärke. Durch die Felderzeugungseinrichtung und das Medium wird dabei insbesondere die Bewegbarkeit des Eingabeelements gezielt beeinflusst.

Das erfindungsgemäße Eingabegerät dient insbesondere zur Durchführung wenigstens eines der zuvor beschriebenen Verfahren. Auch das erfindungsgemäße Eingabegerät löst die zuvor gestellte Aufgabe besonders vorteilhaft. Insbesondere weist das Eingabegerät dazu die zur Durchführung des Verfahrens notwendigen Vorrichtungen auf. Insbesondere weist das Eingabegerät wenigstens diejenigen Vorrichtungen auf, welche im Rahmen der Beschreibung des erfindungsgemäßen Verfahrens vorgestellt wurden. Insbesondere ist das Eingabegerät dazu geeignet und ausgebildet, das zuvor beschriebene Verfahren mittels eines im Eingabegerät und/oder in der Rechnereinrichtung hinterlegten Algorithmus umzusetzen.

Eine für die Verwendung mit der Erfindung besonders vorteilhaft geeignete Bremseinrichtung wird auch in der Patentanmeldung DE 10 2017 111 031 A1 beschrieben. Die gesamte Offenbarung der DE 10 2017 111 031 A1 wird hiermit Teil des Offenbarungsgehalts der vorliegenden Anmeldung.

Die Bremseinrichtung weist insbesondere wenigstens ein Keillager und wenigstens eine axial zur Drehachse angeordnete Spule auf. Dadurch muss die Spule nicht neben den Walzen des Keillagers platziert werden, wodurch bei längeren Walzen die Ausdehnung in axialer Richtung geringer gehalten werden kann. Das Eingaberad ist insbesondere radial um das Keillager herum angeordnet.

Das erfindungsgemäße Verfahren und das erfindungsgemäße Eingabegerät eigenen sich für viele Anwendungen, von denen einige nachfolgend beispielhaft dargestellt werden:
So ist zum Beispiel möglich ein intelligenter Lesemodus in Verbindung mit wenigstens einer Rechnereinrichtung denkbar. Dabei wird beispielsweise durch eine Betätigung des Eingabeelements auf eine gut lesbare Größe gezoomt und dann insbesondere beim Drehen immer genauso, wie ein Mensch auch eine Textstelle lesen würde.

Das bedeutet, dass der Zoom am Ende des Satzes an den Anfang zurückspringt usw. Dabei bleibt die Schrift immer auf gleicher Höhe und bevorzugt im gleichen Lesebereich, damit das Auge nicht hin- und herspringen muss.

Außerdem eignen sich das Verfahren und das Eingabegerät insbesondere zum Annehmen und Ablehnen von Anrufen durch Mobiltelefone und/oder haptischen Telefonhüllen. So kann bei einem Anruf insbesondere in Abhängigkeit einer Drehrichtung eines Eingabeelements mit einem Anschlagpunkt, ein Anruf angenommen oder abgelehnt werden. Beim Ablehnen des Anrufes ist es vorzugweise möglich durch verschiedene Nachrichten durch das Eingabeelement zu scrollen, welche insbesondere durch eine Betätigung an den Anrufer gesendet werden.

Außerdem ist es denkbar, das Verfahren und das Eingabegerät für Menschen mit Sehbehinderung und insbesondere Blinde einzusetzen, welche insbesondere in Form eines haptischen Morsecodes durch das Eingabegerät und vorzugsweise durch das Eingabeelement ein entsprechendes Feedback erfahren, welches vorteilhaft als Hilfestellung dient.

Außerdem ist es denkbar, das erfindungsgemäße Verfahren und das Eingabegerät in einer Daumenwalze zu nutzen. Dabei kann die Bremseinrichtung der Daumenwalze vorteilhaft als liegendes Keillager ausgeführt werden. Die Bauform ist insbesondere sehr schmal.

Vorteilhaft sind die Wälzkörper in diesem Fall als zylinderförmige Walzen ausgeführt. Die Walzen weisen einen kleinen Durchmesser (z. B. 1 mm) und vorteilhaft eine größere axiale Ausdehnung (z. B. 5 mm) auf. Eine Magnetspule kann entweder im Wesentlichen liegend (in axiale Richtung gewickelt) oder auch im Wesentlichen in radiale Richtung (Spule um die Achse gewickelt) ausgeführt werden.

Wie auch insbesondere bei anderen Aktoren für haptisches Feedback braucht vorzugsweise auch die Daumenwalze wenigstens einen Sensor, der vorteilhaft wenigstens eine Drehbewegung misst. Dazu kann insbesondere wenigstens ein Drehgeber oder auch vorteilhaft ein Magnetring mit Hallsensor verwendet werden. Es können vorteilhaft mit der Daumenwalze prinzipiell insbesondere dieselben haptischen Rückmeldungen implementiert werden, wie vorteilhaft bei anderen Eingabegeräten, welche insbesondere als Drehknopf mit wenigstens einem Keillager ausführbar sind. Durch den vorteilhaft kleinen Bauraum können vorzugsweise nicht so hohe Drehmomente erzeugt werden. Erfahrungsgemäß kann hierauf bei einem kleinen Durchmesser insbesondere verzichtet werden, bzw. hohe Drehmomente können von untergeordneter Bedeutung sein.

Die Daumenwalze kann vorteilhaft auch eine Push-Funktion (Drücken und Halten) haben, bei der die Daumenwalze vorteilhaft gedrückt wird. Dies kann insbesondere zum Bestätigen einer Funktion und/oder auch zum Schalten (Ein/Aus) und/oder insbesondere auch als Return-Funktion benutzt werden. Vorteilhaft kann auch jede andere Funktion z. B. vom Kunden definiert werden, wie z. B. das Abnehmen oder Auflegen des Anrufes.

Ein Eingabegerät, welche vorteilhaft als Daumenwalze ausgeführt ist, kann beispielsweise auch als mechanischer Ein-/Ausschalter verwendet werden (Drehen), und/oder vorzugsweise auch zum Abheben vom Smartphone oder zum Auflegen. Hier kann durch das Verfahren und das Eingabegerät bezüglich einer Fehlbedienung eine erhöhte Funktionssicherheit gegenüber einem Slider oder Softwareschalter erreichbar sein.

Außerdem sind Anwendungen denkbar, bei denen haptische Rückmeldungen von einem als Maus ausgeführten Eingabegerät (oder von einem Programm) eine Arbeitsgeschwindigkeit erhöhen und/oder vorteilhaft helfen, Fehler zu vermeiden. Dies kann insbesondere bei langen Listen, wie zum Beispiel bei Tabellenkalkulationsprogrammen (z. B. Excel) und/oder auch Textverarbeitungsprogrammen (z.B. Word) vorteilhaft sein. Hier gibt es viele verschiedene vorteilhafte Anwendungsfälle (dabei können einzelne Anwendungsfälle für sich genommen oder in beliebiger Kombination miteinander umgesetzt):
- Ein Scrollrad als Bedienelement stoppt insbesondere bei bevorzugten Punkten kurz z. B. bei wichtigen Daten, Summen, am Ende von Listen oder Kapiteln, bei Überschriften, in Word bei rot markierten (insbesondere falsch geschriebenen) Wörtern und/oder am Ende von Dateien usw.
- Bei Verwendung einer Suchfunktion springt der Cursor vorteilhaft beim Scrollen mit einem Eingabeelement weiter zum nächsten Suchergebnis. Das beschleunigt insbesondere das Suchen von Daten in großen Listen und Dateien.
- Vorteilhaft stoppt ein Mausrad bei Zellen, welche mit einer Funktion belegt sind (z. B. programmierte Zellen). So kann insbesondere verhindert werden, dass nicht aus Versehen programmierte Zellen gelöscht und mit einer Zahl belegt werden.
- Außerdem kann die Anwendung auch für formatierte Zellen vorteilhaft sein. Der Zeiger springt insbesondere zu Zellen gleicher Formatierung und/oder bleibt vorteilhaft bei Zellen bestimmter Formatierung stehen.
- Insbesondere beim langsamen Scrollen durch wenigstens ein Bedienelement wird vorteilhaft nur ein wenig weiter geblättert in einer Datei und beispielsweise bei schnellem Scrollen mehr. Insbesondere kann dies durch ein größeres Raster beim Drehen des Mausrades als Eingabeelement angezeigt werden.
- Insbesondere beim Scrollen durch Excel-Listen sind die Rasterpunkte in fixem Zellenabstand (einstellbar), um so vorteilhaft ein Gefühl der Länge der Liste zu bekommen.
- Insbesondere kann beim Scrollen durch eine Excel-Liste ein vorprogrammierter "Stop" bzw. Anschlag bei Summen oder bestimmten wichtigen Ergebnissen einstellbar sein.
- Der Rasterabstand verändert sich insbesondere abhängig von der Position in der Datei. So kann die Navigation in einer Datei vorteilhaft erleichtert werden. Z.B.: Wird der Abstand der Rasterung in der Nähe von bestimmten Positionen (neuer Abschnitt, Überschrift, Summen, Ende etc.) insbesondere kleiner oder ein als Mausrad ausgebildetes Eingabeelement lässt sich schwerer drehen und zeigt so beispielsweise an, dass man sich insbesondere diesem Bereich nähert. Ein Benutzer weiß insbesondere dadurch schon vor Erreichen dieser Position, dass man sich ihr beispielsweise nähert und nicht erst, wenn man insbesondere darauf trifft. Dies ist vorteilhaft für Menschen mit Sehbehinderung besonders gut geeignet.
- Wenn mehrere Personen an gleicher Datei arbeiten (z.B. in Word) ist es möglich, dass mit insbesondere haptischer Rückmeldung vorteilhaft Fehler vermieden werden, da insbesondere Änderungen nicht mehr so schnell übersehen werden. Beispielsweise stoppt ein Mausrad bei Änderungen einer anderen Person, wenn beispielsweise durch die Datei gescrollt wird.
- Im Start-Menü von Programmen, insbesondere Systemprogrammen von Rechnersystemen, werden z. B. bei den meistverwendeten Programme als Kacheln weiter oben angezeigt. Mit dem adaptiven Mausrad kann insbesondere bei diesen Programmen stärker gebremst werden.

Darüber hinaus leiten sich viele mögliche Vorteile aus einem als Maus ausgebildeten Eingabegerät mit insbesondere bidirektionaler Kommunikation ab:
- Fehlermeldungen können insbesondere haptisch angezeigt werden (beispielhaft durch beliebige Art von Rückmeldung, z.B. Vibration)
- Es können insbesondere Ereignisse angezeigt werden, z.B. E-Mail-Eingang etc.
- Insbesondere bei einer Eingabe in eine Rechnereinrichtung, wie dem Klicken eines Buttons/Links etc. erhält der Benutzer vorteilhaft eine Rückmeldung. Dadurch wird ein mehrfaches Öffnen eines Programms insbesondere verhindert, wenn dieses insbesondere nicht gleich öffnet oder beispielsweise beim Senden einer E-Mail etc.

- Weiter kann die Maus auch als Lernhilfe für neue Programme, Tutorials und Computer allgemein beispielsweise vorteilhaft einsetzbar sein: Ein Benutzer erhält insbesondere wenigstens eine haptische Rückmeldung, wenn im Tutorial etwas beispielsweise falsch bzw. richtig gemacht wird. Das erleichtert insbesondere den Einstieg in neue Programme. Ein Benutzer kann eventuell vorteilhaft einfacher lernen, wenn er Feedback insbesondere in irgendeiner Form bekommt.
- Außerdem ist es denkbar, dass eine Maus als Eingabegerät selbst lernt: Die Software merkt sich dann insbesondere Bewegungsmuster des Eingabeelements und nutzt diese zur vorteilhaft internen Ableitung insbesondere von Steuerungsstrukturen und Befehlen (künstliche Intelligenz).

Außerdem sind insbesondere folgende Anwendungen bei Computerspielen/Spieleanwendungen denkbar:
- Die Gewohnheiten des Benutzers und können unterstützt werden, vorteilhaft beim Suchen, insbesondere durch einen "Stop" bei häufig benutzten Schaltflächen, Links etc.
- Außerdem ist es denkbar, wenigstens eine Vibration als zusätzliche haptische Antwort einzubinden.

Darüber hinaus sind auch Vorteile bei einer bidirektionalen Kommunikation bei CAD-Programmen möglich und denkbar:
- Insbesondere ein einfacheres Fangen durch haptisches Feedback insbesondere bei Erreichen einer Kontur etc.
- Eine vorteilhafte Fehleranzeige bei unerlaubten Konstruktionen, z.B. wenn sich Flächen oder Konturen schneiden, oder eine Bohrung zu tief geht.

- Beim Einstellen von Werten stoppt vorteilhaft zum Beispiel das Scrollrad beim Erreichen insbesondere von Minimal- und Maximalwerten oder unerlaubten Werten etc.
- Beim Zoomen ist vorteilhaft der Widerstand nicht derselbe beim Vergrößern, wie insbesondere beim Verkleinern.
- Insbesondere kann das Eingabegerät als Lernhilfe durch haptisches Feedback ausgeführt sein.
- Bei der Bewegung insbesondere großer Teile mit der Maus, einem Joystick etc. wirkt beispielsweise mehr Widerstand entgegen. Das Scrollrad wird vorteilhaft gebremst, oder auch insbesondere der Widerstand der Maus auf Oberfläche (z.B. insbesondere durch beispielsweise wenigstens eine Kugel an der Unterseite (Databot-Maus). So kann zum Beispiel vorteilhaft die Größe von Teilen vorteilhaft gefühlt werden.

Außerdem sind darüber hinaus auch viele Vorteile beim Gaming bzw. bei Computerspielen denkbar:
- Der Widerstand von Mausrad/Joystick ändert sich insbesondere je nach Spielsituation. Z. B. wird beim Fahren von großen Fahrzeugen beispielsweise Widerstand größer.
- Die Geräte können beispielsweise an reale Systeme angepasst werden (z.B. Joystick eines Flugzeugs im Flugsimulator: Verschiedene Flugzeugtypen haben insbesondere verschiedenen Widerstand im Eingabegerät und insbesondere im Joystick).
- Es ist insbesondere eine zusätzliche Antwort des Systems durch Vibrationen (Rippel) möglich.
- Fußballspiel: Ein Widerstand der Steuerung nimmt insbesondere zu, wenn ein Benutzer zum Beispiel im Ballbesitz ist.
- Simulation (Landwirtschaft): Die Steuerung verändert sich insbesondere je nach Untergrund z.B. Erde, Asphalt, Sand und/oder etc.
- Autorennspiel: Es kann eventuell mit einem Lenkrad mit wenigstens einer haptischen Rückmeldung insbesondere durch wenigstens ein Eingabegerät gespielt werden. Dabei kann insbesondere beispielsweise ein haptisches Daumenrad im Lenkrad vorhanden sein, um z.B. Radiosender zu wechseln, berücksichtigt werden. Die Steuerung kann insbesondere auch je nach Untergrund geändert werden. Dies kann besonders bei einer Anwendung mit Lenkrad der Fall sein. Insbesondere ist ein Gangwechsel mit einem Eingabegerät denkbar, welcher insbesondere wenigstens eine Bewegung eines Daumenrads und/oder ein Scrollrads umfasst.
- Insbesondere ist eine Nutzung als Lernprogramm für Fahrschulen möglich und denkbar.
- Handicap für gute Gamer: Gute Spieler erhalten insbesondere ein schwergängigeres Eingabegerät, welches beispielsweise wenigstens als Maus und/oder wenigstens als ein Eingabegerät an der Maus ausgeführt ist. Die Haptik arbeitet dabei insbesondere gegen den Spieler, damit er insbesondere einen Nachteil gegenüber schlechteren Spielern hat. So kann das "Können" verschiedener Spieler vorteilhaft aufeinander angepasst werden.

Außerdem ist auch eine vorteilhafte Nutzung des Verfahrens und des Eingabegeräts vorteilhaft für Automobile, insbesondere in Form einer Daumenwalze am Lenkrad oder auch vorzugsweise einem Dreh-Drücksteller denkbar, welche auch mit den nachstehenden Vorteilen verbunden sein kann:
- Mit haptischem Daumenrad insbesondere Radiosender verstellen und/oder vorteilhaft die Lautstärke einstellen.
- Insbesondere kann das Eingabegerät zum Umstellen einer Uhr, auch vorteilhaft mechanischer Uhren mit zum Beispiel dem Dreh-Drück-Steller (vorteilhaft wie das Stellrad/Krone bei mechanischen Armbanduhren) nutzbar sein, z. B. leichte Rasterung für jede Minute, stärkerer Widerstand bei fünf Minuten, mehr bei zehn, 15, 30 und 60 Minuten.
- Es ist außerdem eine intuitive Anwendung zur Vereinfachung der Bedienkomplexität möglich, z.B. kann bei einem Anruf die Daumenwalze insbesondere zuerst zum Abnehmen oder Ablehnen des Anrufs verwendet werden. Hinauf drehen nimmt insbesondere ab, hinab drehen legt vorteilhaft auf und/oder umgekehrt. Angezeigt werden kann das insbesondere durch z. B. mit LED beleuchteten Anzeigen ("grün" - Abnehmen: "aufwärts"; "rot" - Ablehnen: "abwärts"). Wenn der Benutzer den Anruf insbesondere angenommen hat, kann während des Gesprächs die Lautstärke vorteilhaft insbesondere mit demselben Daumenrad verstellt werden. Die Bedienung soll dabei vorteilhaft möglichst einfach und intuitiv erfolgen. Dazu kann vorteilhaft mit änderbaren Anzeigen gearbeitet werden, entweder beispielsweise mit Displays (z.B. Oled-Display) oder insbesondere durch Farbanzeige mit verschiedenfarbigen LEDs (Rot und Grün als bekannte Farben für ein-aus; etc.).
- Weiter ist es denkbar einen Gangwechsel, einen Wechsel eines Fahrmodus, die Einstellung eines Tempomats, Einstellung ACC (Adaptive Cruise Control), mit haptischem Eingabegerät, welches zum Beispiel als Drehknopf oder Daumenwalze ausgebildet ist, durchzuführen.
- Außerdem kann das Eingabegerät für eine schnellere Telefonbuchsuche nutzbar sein: So kann mit dem Daumenrad, insbesondere durch das Telefonbuch gedreht werden. Vorteilhaft beispielsweise beim Erreichen eines neuen oder eines gesuchten Buchstabens, insbesondere eines Anfangsbuchstabens, kann ein Benutzer vorteilhaft einen kurzen Widerstand erfahren. Das kann vorteilhaft sein, weil oder wenn vorzugsweise eine Sprachsteuerung oft nicht gleich den richtigen Namen versteht. Vorzugsweise auch wenigstens eine Gestensteuerung oder die Verwendung von wenigstens einem Touchpad und Touchscreen können insbesondere oft zum falschen Buchstaben führen. Mit dem Daumenrad kann man vorteilhaft sehr zielsicher zum Beispiel den richtigen Namen finden und/oder auch suchen. Insbesondere mit zusätzlicher haptischer Hilfe ist die Suche insbesondere einfacher und vorteilhaft schneller. Dies kann besonders bei der Anwendung in Fahrzeugen vorteilhaft sein, um insbesondere nicht lange insbesondere mit der Aufmerksamkeit von der Fahrbahn abgelenkt zu werden.

Außerdem sind folgende allgemeine Vorteile auch als Möglichkeiten realisierbar:
- Ein Scrollrad lässt sich insbesondere schwerer am Ende von Seiten drehen (stoppt vorteilhaft), beispielsweise insbesondere am Ende der Ansicht, vorteilhaft bei einem Zoommaximum/- minimum, insbesondere am Ende von Listen etc.
- Es wird insbesondere beim Aufsuchen verbotener Seiten vorteilhaft gesperrt, z.B. als Kindersicherung im Internet.
- Die Rasterung des Scrollrades ist insbesondere ein- und ausschaltbar und vorzugsweise wenigstens eine Stärke der Rasterung insbesondere gleichzeitig veränderbar.
- Insbesondere eine Rasterweite kann der Benutzer vorteilhaft beliebig einstellen.
- Es ist denkbar, dass Ordner- und Dateigrößen vorteilhaft wenigstens durch einen Widerstand beim Verschieben angezeigt werden können. Insbesondere beim Durchscrollen von Ordnern kann vorteilhaft der Widerstand bei großen Ordnern größer und/oder insbesondere bei kleinen Ordnern und einzelnen Dateien vorteilhaft kleiner sein als beispielsweise eine Referenz und/oder vorzugsweise ein voreingestellter Standardwert.
- Für sehbehinderte Personen kann wenigstens ein haptisches Feedback von großem Vorteil sein (wenn insbesondere der Mauszeiger nicht mehr gut gesehen wird, weil dieser beispielsweise zu klein ist).
- Das Mausrad kann beispielsweise vorzugsweise ein Scrollverhalten verändern, wenn sich der Cursor beispielsweise einem gewünschten (favorisierten) Punkt nähert (oder fixen Punkten, in konstantem Abstand etc.).
- Bei Unterhaltungsmedien kann es denkbar sein, dass das Mausrad vorteilhaft beim Vor- und Rückspulen von Filmen, Liedern etc. stoppt, vorteilhaft beispielsweise alle fünf Minuten, bei jeder neuen Szene, am Anfang des nächsten Liedes und/oder in Playlists bei oft gehörten Liedern usw.
- Der Widerstand ändert sich vorteilhaft beim Verstellen der Lautstärke. Bei Lautstärke "0", d. h. insbesondere keine Lautstärke stoppt wenigstens ein Eingabegerät insbesondere und wenn beispielsweise ein zu hoher Pegel erreicht wird. Wenn insbesondere wenigstens eine Gefahr von Hörschäden besteht, lässt sich das Mausrad insbesondere schwerer drehen.
- Selbiges kann beispielsweise auch für eine Bildschirmhelligkeit gelten. Bei bevorzugter Bildschirmhelligkeit kann zum Beispiel ein kurzer Widerstand bzw. eine kurzzeitige Verzögerung des Bedienelements durch die Bremseinrichtung vorteilhaft wenigstens eine Bewegung stoppen und/oder auch verzögern.
- Alternativ kann zum Beispiel wenigstens an der Tastatur ein haptisches Scrollrad vorteilhaft angeordnet sein, damit durch Seiten und Dokumente etc. beispielsweise schnell gescrollt werden kann, ohne die Hand insbesondere von der Tastatur nehmen zu müssen. Es kann sowohl vorteilhaft als ein Drehknopf als auch ein Scrollrad und/oder auch ein Daumenrad ausgebildet sein. Gesteuert werden diese Eingabegeräte beispielsweise vorteilhaft durch ein Keillager mit axialer Spule, oder auch vorteilhaft durch das klassische Keillager, welches insbesondere eine radiale Spule aufweist.
- Beispielsweise kann das Eingabegerät auch zum Durchschalten und insbesondere "Durchswitchen" vorteilhaft durch Apps nutzbar sein. Dabei kann ein höherer Widerstand insbesondere bei bevorzugten Apps vorliegen.
- Die Eingabe von Musiknoten in Notensatzprogramme kann insbesondere stark erleichtert werden: Zum Beispiel kann ein Eingaberad beispielsweise bei jeder Notenlinie rasten. Der Widerstand ist insbesondere bei tiefen Tönen groß und wird vorteilhaft geringer insbesondere bei höheren Tönen. So wird vorteilhaft die Tonhöhe am Mausrad gefühlt und man weiß vorteilhaft, wo man sich insbesondere auf der Notenzeile befindet.
- Bei Zeichen-Programmen: Insbesondere bei einer Veränderung der Einstellungen ändert sich vorteilhaft der Widerstand eines bewegbaren Eingabegeräts: wird z.B. die Strichdicke mit dem Mausrad vergrößert, steigt insbesondere wenigstens ein Widerstand zum Beispiel eines Mausrads. Oder insbesondere beim Zoomen ist der Widerstand vorteilhaft beim Vergrößern einer Ansicht größer als insbesondere wie beim Verkleinern.
- Vorteilhaft bei einer Suche im Internet bzw. beispielsweise über eine Suchmaschine kann ein Scrollen beispielsweise immer schwerer werden, je weiter man sich von einer ursprünglichen Suchanfrage entfernt. So ist es beispielsweise wenigstens haptisch merkbar, wenn man sich vorzugsweise bei unwahrscheinlichen Treffern befindet.
- Insbesondere kann es beim Programmieren vorteilhaft sein, dass sich ein Raster vorteilhaft insbesondere einer Syntax anpasst, d. h. vorteilhaft wenigstens einer Programmiersprache anpasst bzw. daran orientiert. Es kann zum Beispiel bei einem Schleifenanfang und/oder -ende vorteilhaft stehen bleiben bzw. es kann beispielsweise einen kurzen Widerstand geben.
- Vorteilhaft kann zum Beispiel bei E-Mail-Programmen vorteilhaft wenigstens ein Mausrad insbesondere stoppen: insbesondere bei jeder ungeöffneten Mail, bei Mails mit Anhang, bei Mails auf die geantwortet wurde und/oder bei Mails mit höherer Priorität usw.
- Vorteilhaft können verschiedene Modi programmierbar sein, sodass jeder Anwender seine eigenen Ideen vorteilhaft umsetzen kann. Dazu kann beispielsweise eine einfache App beispielsweise zum Anpassen individueller haptischer Rückmeldungen implementiert werden.
- Insbesondere eine Stärke des Mausradwiderstands ist vorteilhaft durch Drücken des Mausrades einstellbar: wird beispielsweise ein Mausrad vorzugsweise gedrückt, wird vorteilhaft insbesondere ein Menü aufgerufen, um beispielsweise die Stärke des Widerstandes einstellen zu können.
- Ein erfindungsgemäßes Scrollrad kann vorteilhaft auch Anwendung an Mobiltelefonen oder anderen mobilen Geräten finden. So kann z.B. die Lautstärke am Handy verändert werden, ohne dass man auf den Touchscreen schauen muss.
- Darüber hinaus ist eine Verwendung mit Spielkonsolen denkbar.

Die Erfindung ermöglicht über interne oder externe Software oder über eine in dem Eingabegerät einprogrammierte oder umfasste Steuerung die Zuverfügungstellung eines virtuellen Freilaufs bzw. einen simulierten Freilaufzustandes.

Die Steuerung des Freilaufzustandes kann innerhalb des Eingabegerätes erfolgen. Die Steuerung des Freilaufzustandes kann außerhalb des Eingabegerätes erfolgen. Insbesondere kann die Steuerung des Freilaufzustandes in einem zugeordneten Computer erfolgen.

Bei einer Computermaus versteht man unter einem Freilauf grundsätzlich, dass sich das Mausrad ohne äußere Krafteinwirkung weiter dreht, nachdem es (durch den Finger) in Bewegung gesetzt wird. Der Finger wird dabei vom Mausrad entfernt und wenn der Freilauf stoppen soll, wieder auf das Mausrad gelegt. Ein solcher "echter" Freilauf bedingt eine gewisse eingebrachte Energie und Leichtgängigkeit des Mausrades und somit eine niedere Grundreibung.

Mit einem echten Freilauf oder einem simulierten Freilaufzustand kann in einer (sehr) langen Liste/Dokument so schnell durch die Liste gescrollt werden. Bei einem echten Freilauf ergibt ein schweres Mausrad (z.B. aus Metall) einen längeren echten Freilauf.

Gezielt steuerbare und bremsbare Mausräder können aufgrund innerer Reibungen auch bei relativ hoher Energieeinbringung (durch eine schnelle Fingerbewegung - einem schnellen Anschupfen/Schwung geben) nicht sehr lang in freie Rotation versetzt werden.

Mit einer magnetorheologischen Bremse kann bei niedrigen Grundreibungen oder der Reduktion der Grundreibung ein Freilauf über einige Umdrehungen erzielt werden. Das erleichtert die Implementierung eines simulierten Freilaufzustandes.

Der Freilaufzustand wird insbesondere durch die Software simuliert und ist kein "echter" (physikalischer) Freilauf. So wird z.B. das Mausrad vom Benutzer angedreht und die Software interpretiert dies als anhaltendes Drehen/Scrollen, bis der Benutzer das Mausrad z. B. wieder berührt und so den (virtuellen) Freilauf stoppt, wobei in Wirklichkeit das Mausrad dabei schon wieder stehen kann.

Eine Aktivierung des simulierten Freilaufzustandes kann insbesondere erfolgen über:
- durch Aktivierung über eine Taste oder einen Schalter
- oder durch das Überschreiten einer bestimmten (Dreh-) Geschwindigkeit/Winkelgeschwindigkeit, d.h. z B. über einen Schwellwert hinaus
- oder durch das Überschreiten einer gewissen Beschleunigung
- oder das System erkennt dies selbständig (Künstliche Intelligenz; Maschinenlernen)
- oder durch eine Geste, wenn z. B. eine Kamera den Nutzer dabei anschaut
- oder durch einen akustischen Befehl des Nutzers
- oder durch eine Wischgeste des Benutzers auf z.B. einem Touchpad,
- oder durch einen Tastaturbefehl, oder eine Menüeingabe oder durch einen automatischen Startbefehl.

Ein möglicherweise aktiv bremsbares Eingabegerät schaltet dann insbesondere in den Leerlauf bzw. in die kleinstmögliche Dämpfung, so dass das Eingabeelement (wie z. B. ein Mausrad) nur eine minimale Bremsung erfährt (Grundreibung).

Wenn der Benutzer z. B. ein Mausrad dreht, wird die dabei maximal erreichte Geschwindigkeit (simuliert in der Ausgabe) beibehalten oder langsam in Software reduziert, evtl. über eine definierte oder einstellbare Reduktionskurve.

Der simulierte Freilaufzustand wird insbesondere wieder verlassen, wenn der Benutzer das Eingabeelement (z.B. das Mausrad) wieder berührt. Die Berührung kann z. B. erkannt werden über:
- das Signal des Drehgebers (die Beschleunigung am Drehwinkelsensors; Änderung des Winkels des Mausrades)
- Optisch (Kamera, Umfeldsensorik)
- Kapazitiv.

Die Sensoreinrichtung oder ein Drehgeber der Sensoreinrichtung ist insbesondere so hochauflösend, dass die kleinste Bewegung gemessen werden kann. Der Benutzer merkt so gar nicht, dass er das Mausrad um einen kleine Winkel dreht, wenn er den Finger (wieder) auf das Mausrad legt. Winzige Bewegungen, die aus Vibrationen von anderen Quellen kommen, müssen dabei herausgefiltert werden.

Die Verwendung von magnetorheologischen Bremseinrichtungen in Eingabegeräten bietet dann den Vorteil, dass die Sensoreinrichtung darin meist eine genügend hohe Auflösung hat, insbesondere wenn Ticks (Rippel) adaptiv erzeugt werden sollen. Zum Stoppen des Freilaufzustandes ist eine Richtungsumkehr z. B. des Mausrades nicht nötig.

Der Finger des Benutzers muss im Freilaufzustand bzw. zur Aktivierung eines solchen regelmäßig von dem Mausrad gehoben werden. Aber das ist auch bei einem "echten" Freilauf der Fall, denn bei einem richtigen Freilauf darf der Finger auch nicht auf dem Mausrad verweilen, da der Finger es sonst bremsen würde.

Wenn der Benutzer z. B. das Mausrad eines Bediengerätes schnell andreht und die Dämpfkraft eines aktiv bremsbaren Mausrades auf minimal geschaltet wird, merkt der Benutzer in der Regel gar nicht, dass das Mausrad durch die Reibung abgebremst wird, wenn er nicht den Finger darauf lässt oder ständig auf das Mausrad schaut.

Erste Tests mit einem anmeldungsgemäßen Eingabegerät haben gut funktioniert.
- Das optische oder akustisches Feedback an den Benutzer (auch wenn im Standard-Use-Case gar nicht notwendig) kann man eventuell zusätzlich durch die integrierten LEDs in den Computermäusen simulieren und somit eine mechanische Drehung vortäuschen ("Faden" zwischen z. B. zwei LEDs oder auf eine ähnliche Weise).

Ein virtueller und simulierter Freilaufzustand ist auch bei anderen Anwendungen nützlich, also nicht nur beim Mausrad, sondern auch bei Dreh-/Drückstellern, bei Haptikknöpfen, bei seitlichen Mausrädern, bei Daumenwalzen z. B. im Lenkrad eines Automobils oder auch bei einer Daumenwalze in einer Hülle eines Smartphones oder an einer Daumenwalze an einem Smartphone.

In einer bevorzugten Weiterbildung umfasst das Eingabegerät bzw. die Bedieneinrichtung eine Steuereinrichtung, welche dazu geeignet und ausgebildet ist, die Drehbewegung des Bedienteils mittels der insbesondere magnetorheologischen Bremseinrichtung in Abhängigkeit eines Betriebszustands eines Kraftfahrzeugs zu bremsen. Vorzugsweise umfasst der Betriebszustand wenigstens einen Fahrbetrieb und wenigstens einen Standbetrieb. Der Standbetrieb umfasst insbesondere wenigstens einen Aufladebetrieb für eine Traktionsbatterie eines wenigstens teilweise elektrisch betriebenen Fahrzeugs.

Insbesondere ist die Steuereinrichtung dazu geeignet und ausgebildet, in Abhängigkeit des Betriebszustands automatisch und vorzugsweise unter Verwendung eines Algorithmus des maschinellen Lernens eine Funktionsebene auszuwählen und einzustellen oder vorzuschlagen, welche mit dem Bedienteil bedient werden kann. Insbesondere umfasst die Funktionsebene wenigstens eine Unterhaltungsfunktion. Insbesondere wird die Unterhaltungsfunktion in Abhängigkeit des Standbetriebs ausgewählt. Insbesondere umfasst die Funktionsebene wenigstens eine Fahrassistenzfunktion. Insbesondere wird die Fahrassistenzfunktion in Abhängigkeit des Fahrbetriebs ausgewählt.

Es ist bevorzugt und vorteilhaft, dass die Steuereinrichtung dazu geeignet und ausgebildet ist, in Abhängigkeit des Betriebszustands automatisch und vorzugsweise unter Verwendung des Algorithmus des maschinellen Lernens eine Funktionsebene zu sperren und/oder nicht vorzuschlagen. Insbesondere werden in Abhängigkeit des Fahrbetriebs gezielt solche Funktionsebenen gesperrt und/oder nicht vorgeschlagen, welche zur Ablenkung des Fahrers geeignet sind und/oder welche während der Fahrt gesetzlich verboten sind. Insbesondere ist in der Steuereinrichtung hinterlegbar, welche Funktionsebenen gesperrt und/oder nicht vorgeschlagen werden sollen.

Solche Weiterbildungen können rein beispielhaft wie folgt ausgeführt werden (dabei können einzelne Merkmale auch für sich genommen oder in beliebiger Kombination miteinander umgesetzt werden): Elektro-/Hybridfahrzeuge benötigen mehr Zeit zum Tanken (Laden) als Verbrennungsmotorenfahrzeuge. Je nach Ladestruktur und Batteriegröße können dies auch mehrere Stunden sein. Selbst bei Schnellladestationen (800 Volt) dauert das Laden merklich länger als beim Tanken mit fossilem Treibstoff. Ein Kraftfahrzeug ist mit vielen Bedienelementen ausgerüstet, welche wenigstens teilweise wie das hier beschriebene Bedienteil ausgebildet sind. Während des Ladevorgangs (Standbetrieb) werden die adaptiven (magnetorheologischen) Bedienteile im Fahrzeug haptisch so angesteuert, dass sich der Fahrer damit die Zeit vertreiben oder arbeiten kann (Einstellung von Unterhaltungsfunktionen). Das Auto samt den Bedienteilen wird dann zum Büro oder zur Gamingstation. Zum Beispiel kann ein als Drehrad bzw. Daumenwalze ausgebildetes Bedienteil im Lenkrad oder in der Mittelkonsole als Computermausrad verwendet werden, das Headup-, Armaturendisplay oder die anderen (Touch-) Displays als Anzeigeeinheit, die Beleuchtung um Effekte zu machen und die Spracheingabe um z.B. Texte zu diktieren. Selbst ein Multifunktionssitz (dessen Massagefunktion) oder das Fahrwerk kann miteinbezogen werden (z.B. Luftfahrwerk von einem Auto oder LKW) und bestimmte Spielzustände realistischer nachzustellen. Der Blinker-, Ganghebel, (Schalt)wippen/Pedals zum Steuerelement in Spielen, die (by wire) Pedalerie zum Steuern eines Autos in einem Gamingspiel (z. B. Need for Speed...), und das Lenkrad, besonders bei Autos mit Steer by wire, oder alles zusammen als Flugsimulatorbedienung/-spiel. Hierfür muss die Haptik (Force Feedback) d. h. die Kraft über Weg oder das Drehmoment über Winkel entsprechend den Anforderungen variabel eingestellt und angepasst werden (insbesondere von der Steuereinrichtung, welche die Bremseinrichtung gezielt ansteuert). Das haptische Feedback der Daumenwalze im Lenkrad wird dahingehend erweitert, dass z. B. in Zusammenhang mit einer Office Anwendung (PC) leichter durch Seiten gescrollte werden kann, beim Seitenumbruch ein kurze Krafterhöhung am Benutzerfinger spürbar ist. Das Eingaberad lässt sich am Ende von Seiten, am Ende der Ansicht, beim Zoommaximum/Minimum, am Ende von Listen etc. schwerer drehen (stoppt). Es wird beim Aufsuchen verbotener Seiten gesperrt (z. B. als Kindersicherung im Internet). Die Rasterung des Eingaberades ist ein- und ausschaltbar und die Stärke der Rasterung veränderbar. Die Rasterweite kann der Benutzer beliebig einstellen. Dateiordner- und Dateigrößen werden durch mehr Widerstand beim Verschieben angezeigt. Beim Durchscrollen von Ordnern ist der Widerstand größer bei großen Ordnern, kleiner bei kleinen und einzelnen Dateien. Die Daumenwalze, welche zu einem Mausrad wird, kann ihr Scrollverhalten verändern, wenn sich der Cursor einem gewünschten (favorisierten) Punkt nähert (oder fixen Punkten, in konstantem Abstand etc.). Wird das Mausrad für Gaming genutzt, so sollte das Drehmoment generell reduziert werden ((z.B. < 1 mNm, weil hierfür das adaptive Drehrad zeitlich viel länger benutzt wird als für das Einstellen eines Menüs beim Autofahren, also anstrengender ist. Beim Autofahren bzw. im Fahrbetrieb sollten die Bedienelemente ein wenig schwerer gehen (höheres Drehmoment oder Kraft; z.B. 2 mNm), da das Fahrzeug Erschütterungen ausgesetzt ist und das Autofahren ein dynamischer Vorgang (von außen wirken Kräfte ein) ist. So können sichere Benutzereingaben erzeugt werden. Das Benutzen der Bedienelement im Stand bzw. beim Laden der Batterie ist ein gesamtstatischer Vorgang, bei welchem das Bedienelement lange und intensiv, aber in ruhiger Umgebung, genutzt wird. Zu hohe Kräfte oder Momente führen hierbei zur schnelleren Ermüdung der Eingabeelemente (Finger, Hand, Fuß) und bei sehr intensiver Eingabe mitunter zu Entzündungen (z.B. Sehnenscheidenentzündung). Zudem muss in Spielen oder Officeanwendung das Drehmoment feiner und mehrstufiger (vielfältiger) und mit haptische anderen Kurvenverläufen variiert werden als beim Bedienen des Autos. Die Modi sind insbesondere bei der Nutzung als nicht fahrspezifisches Bedienelement programmierbar, so dass jeder Anwender seine eigenen Ideen umsetzen kann. Dazu kann ein einfaches App zum Anpassen individueller haptischer Rückmeldungen implementiert sein. Auch kann die Haptik im Fahrzeug von der Spielkonsole zu Hause oder dem PC im Büro übernommen werden (z.B. Einstellungen werden in der Cloud gespeichert und übernommen). Die Haptik sollte aber bei fahrspezifischen Eingaben wieder in einen Standardmode gehen, damit der Fahrzeugfahrer hier ein reproduzierbares Feedback für Fahrereignisse erhält, besonders wenn diese sicherheitsrelevant sind (z.B. Tempomat, Abstandskontrolle, Gas, Bremse...). Obiges ist auch für die hinteren Plätze im Auto von Vorteil. Auch dort können die adaptiven Drehsteller für die Lüftung oder die Eingabegeräte für die Klimatisierung haptisch zu Eingabegeräten für das Spielen verwendet werden. Z. B. Kinder können so beim Laden der Batterie aber auch beim Fahren die schon vorhandenen Bedienelemente multifunktional nutzen und sich so die Zeit vertreiben. Das Fahrzeug kann aber auch in der Garage als "Spielsimulator" oder als "Fahrschulsimulator" verwendet werden, es muss nicht nur beim Laden der Batterie sein. Solche Ausführungen können auch für andere Fahrzeuge wie Lastkraftwagen, OFF-Highwayfahrzeuge, Motorräder, Pistenfahrzeuge, Flugzeuge, Fahrräder..., also Vehikel, welche Bedienelemente haben, die sich adaptiv anpassen lassen.

Die Anmelderin behält sich vor, ein Eingabegerät zu beanspruchen, welche dazu geeignet und ausgebildet ist, nach dem hier beschriebenen Verfahren betrieben zu werden.

Weitere Vorteile und Merkmale der vorliegenden Erfindung ergeben sich aus der Beschreibung der Ausführungsbeispiele, die im Folgenden mit Bezug auf die beiliegenden Figuren erläutert werden.

In den Figuren zeigen:
- Fig. 1a-1f: rein schematische dreidimensionale Ansichten von erfindungsgemäßen Eingabegeräten;
- Fig. 2a: eine rein schematische Darstellung einer Bremsvorrichtung in einer geschnittenen Seitenansicht;
- Fig. 2b: eine rein schematische Darstellung der Bewegungsgeschwindigkeit eines Eingabeelements und des abgeleiteten Signals über der Zeit;
- Fig. 3a,b: eine rein schematische perspektivische Darstellung und eine Draufsicht einer Bremseinrichtung für ein Mausrad als Eingabeelement einer erfindungsgemäßen Computermaus als Eingabegerät;
- Fig. 4: eine rein schematische Darstellung eines Haptikmodus mit einer Rasterung des Bewegungsbereichs durch die magnetorheologische Bremseinrichtung und ein richtungsabhängiger Leerlauf;
- Fig. 5: eine rein schematische Darstellung eines weiteren Haptikmodus mit einer blockierten Stellung der Bewegbarkeit des Eingabeelements durch die magnetorheologische Bremseinrichtung bei einer Eingabe durch Drücken des Eingabeelements;
- Fig. 6: eine rein schematische Darstellung eines Haptikmodus einer geschwindigkeitsabhängigen Rasterung innerhalb des Bewegungsbereichs des Eingabeelements durch die magnetorheologische Bremseinrichtung;
- Fig. 7: eine rein schematische Darstellung eines Haptikmodus mit einer Rasterung innerhalb des Bewegungsbereichs des Eingabeelements, bei der einzelne Rasterpunkte übersprungen werden;
- Fig. 8, 9: eine rein schematische Darstellung eines Haptikmodus eines Warnsignals mit hoher Frequenz und eines zufälligen Stromverlaufs zur Steuerung der Bewegbarkeit des Eingabeelements; und
- Fig. 10: eine rein schematische Darstellung einer Benutzeroberfläche mit einem Profil zur Steuerung der Bewegbarkeit eines Eingabeelements eines Eingabegeräts, welches eine Vielzahl an veränderlichen Eingabebedingungen beinhaltet.

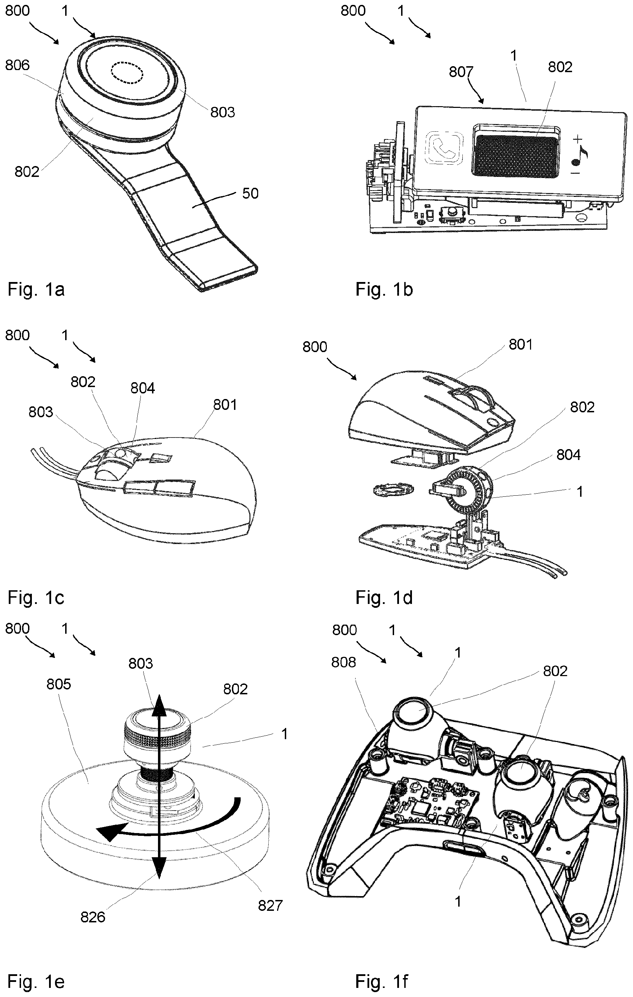

In den Figuren 1a bis 1f sind erfindungsgemäße Eingabegeräte 800 gezeigt, welche mit magnetorheologischen Bremseinrichtungen 1 ausgestattet sind und nach dem erfindungsgemäßen Verfahren betrieben werden. Die Eingabegeräte 800 weisen hier als Eingaberad 803 ausgebildete Eingabeelemente 802 auf.

Figur 1a zeigt ein als Bedienknopf 806 ausgebildetes Eingabegerät 800. Figur 1b zeigt ein als Daumenwalze 807 ausgebildetes Eingabegerät 800. Figuren 1c und 1d zeigen ein als Computermaus 801 ausgebildetes Eingabegerät 800. Dabei ist das Eingaberad 803 hier als Mausrad 804 ausgebildet. Figur 1e zeigt ein als Joystick 805 ausgebildetes Eingabegerät 800. Figur 1f zeigt ein als Gamepad 808 ausgebildetes Eingabegerät 800. In Figur 1e sind zusätzlich eine Linearbewegung 826 und eine Schwenkbewegung 827 gekennzeichnet.

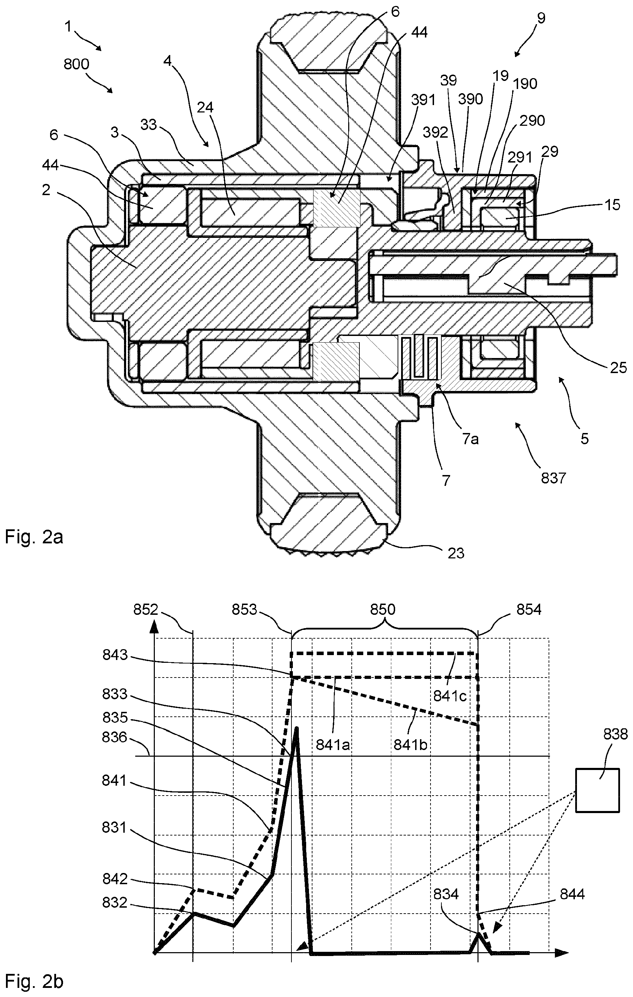

Figur 2a zeigt eine Bremsvorrichtung 1 eines erfindungsgemäßen Eingabegeräts 800 mit einem Drehkörper 3 als Eingabeelement 802 zur Einstellung von Eingaben. Die Bedienung erfolgt hier also wenigstens durch Drehen des Drehkörpers 3.

Der Drehkörper 3 ist mittels einer hier nicht näher gezeigten Lagereinrichtung 22 auf einer Achseinheit 2 drehbar gelagert. Der Drehkörper 3 kann auch mittels einer hier als Wälzlager ausgebildeten Keillagereinrichtung 6 auf einer Achseinheit 2 drehbar gelagert sein. Bevorzugt ist die Keillagereinrichtung 6 jedoch nicht oder nur teilweise für die Lagerung des Drehkörpers 3 auf der Achseinheit vorgesehen, sondern dient für die nachfolgend vorgestellte Bremseinrichtung 4. Dabei dienen die Wälzkörper hier als Bremskörper 44.

Die Achseinheit 2 kann an einem zu bedienenden Objekt und beispielsweise in einem Innenraum eines Kraftfahrzeugs oder an einem Medizingerät oder Smart Device montiert werden. Dazu kann die Achseinheit 2 hier nicht näher dargestellte Montagemittel aufweisen.

Es kann hier oder in den nachfolgenden Ausgestaltungen vorgesehen sein, dass der Drehkörper 3 auch in Längsrichtung bzw. entlang der Drehachse auf der Achseinheit 2 verschiebbar ist. Dann erfolgt eine Bedienung sowohl über das Drehen als auch ein Drücken und/oder Ziehen bzw. Verschieben des Drehknopfs 3.

Der Drehkörper 3 ist hier hülsenartig ausgebildet und umfasst eine zylindrische Wand und eine einstückig damit verbundene Stirnwand. An einer offenen Stirnseite des Drehkörpers 3 tritt die Achseinheit 2 heraus.

Die Fingerwalze 23 kann mit einem hier gestrichelt angedeuteten Zusatzteil 33 ausgestattet sein. Dadurch wird eine Durchmesservergrößerung erreicht, sodass die Drehbarkeit erleichtert wird, zum Beispiel bei einem mit einem Finger drehbaren Rad einer Computermaus oder Gamecontroller oder einem Drehrad bei einer Computertastatur-Daumenwalze.

Die Drehbewegung des Drehknopfs 3 ist hier durch eine in einem Aufnahmeraum 13 im Inneren des Drehknopfs 3 angeordnete magnetorheologische Bremseinrichtung 4 gedämpft. Die Bremseinrichtung 4 erzeugt mit einer Spuleneinheit 24 ein Magnetfeld, das auf ein im Aufnahmeraum 13 befindliches magnetorheologisches Medium 34 einwirkt. Das führt zu einer lokalen und starken Vernetzung von magnetisch polarisierbaren Partikeln im Medium 34. Die Bremseinrichtung 4 ermöglicht dadurch eine gezielte Verzögerung und sogar ein vollständiges Blockieren der Drehbewegung. So kann mit der Bremseinrichtung 4 eine haptische Rückkopplung während der Drehbewegung des Drehkörpers 3 erfolgen, beispielsweise durch eine entsprechend wahrnehmbare Rasterung bzw. durch dynamisch einstellbare Anschläge.

Das Medium ist hier ein magnetorheologisches Fluid, welches beispielsweise als Trägerflüssigkeit ein Öl umfasst, in dem ferromagnetische Partikel 19 vorhanden sind. Glykol, Fett, Silikon, Wasser, Wachs und dickflüssige oder dünnflüssige Stoffe können auch als Trägermedium verwendet werden, ohne darauf beschränkt zu sein. Das Trägermedium kann auch gasförmig und/oder ein Gasgemisch sein (z. B. Luft bzw. Umgebungsluft) bzw. es kann auf das Trägermedium verzichtet werden (Vakuum, Stickstoff, oder Luft und z. B. Umgebungsluft). In diesem Fall werden lediglich durch das Magnetfeld beeinflussbare Partikel (z. B. Carbonyleisen) in den Aufnahmeraum bzw. Wirkspalt gefüllt. Eine Vermischung mit anderen - vorzugsweise mit schmierenden Eigenschaften - Partikel wie Grafit, Molybdän, Kunststoffpartikeln, polymere Materialien sind möglich. Es kann auch eine Kombination aus den genannten Materialien sein (z.B. Carbonyleisenpulver vermischt mit Graphit und Luft als Trägermedium). Als Carbonyleisenpulver ohne (flüssiges) Trägermedium kann zum Beispiel von der Firma BASF das Pulver mit der Bezeichnung CIP ER verwendet werden mit einem Mindestanteil an Eisen von 97%, ohne Beschichtung und einer Durchschnittsgröße der Partikel von 5,1µm, oder auch das CIP SQ-R von BASF mit mindestens 98,5% Eisenanteil, 4,5µm Durchschnittsgröße und SiO2-Beschichtung. Die verschiedenen Pulver unterscheiden sich in der Größenverteilung der Partikel, in der Beschichtung, in der Partikelform etc.

Die ferromagnetischen oder ferrimagnetischen Partikel 19 sind vorzugsweise Carbonyleisenpulver mit sphärischen Mikropartikeln, wobei die Größenverteilung und Form der Partikel vom konkreten Einsatzfall abhängt. Konkret bevorzugt ist eine Verteilung der Partikelgröße zwischen ein und zwanzig Mikrometern, wobei aber auch kleinere (< 1 Mikrometer) bis sehr kleine (wenige Nanometer, typischerweise 5 bis 10 Nanometer) oder größere Partikel von zwanzig, dreißig, vierzig und fünfzig Mikrometer möglich sind. Je nach Anwendungsfall kann die Partikelgröße auch deutlich größer werden und sogar in den Millimeterbereich vordringen (Partikelkugeln). Die Partikel können auch eine spezielle Beschichtung/Mantel (Titanbeschichtung, Keramik-, Karbonmantel, polymere Beschichtung etc.) aufweisen, damit sie die je nach Anwendungsfall auftretenden hohen Druckbelastungen besser aushalten bzw. stabilisiert sind. Die Partikel können auch eine Beschichtung gegen Korrosion oder elektrische Leitung haben. Die magnetorheologischen Partikel können für diesen Anwendungsfall nicht nur aus Carbonyleisenpulver (Reineisen; Eisenpentacarbonyl), sondern z. B. auch aus speziellem Eisen (härterem Stahl) oder anderen speziellen Materialien (Magnetit, Cobalt...), oder einer Kombination daraus, hergestellt werden. Superparamagnetische Partikel mit geringer Hysterese sind auch möglich und vorteilhaft.

Zur Versorgung und Ansteuerung der Spuleneinheit 24 umfasst die Bremseinrichtung 4 hier eine elektrische Anbindung 14, welche beispielsweise in der Art einer Leiterplatte bzw. Prints oder als Kabelleitung ausgebildet ist. Die Anschlussleitung 11 erstreckt sich hier durch eine in Längsrichtung der Achseinheit 2 verlaufende Bohrung 12.

Der Aufnahmeraum 13 ist hier mit einer Dichtungseinrichtung 7 und einer Dichtungseinheit 17 nach außen abgedichtet, um ein Austreten des Mediums 34 zu verhindern. Dabei verschließt die Dichtungseinrichtung 7 die offene Stirnseite des Drehkörpers 3. Dazu liegt ein erstes Dichtteil 27 an der Innenseite des Drehkörpers 3 an. Ein zweites Dichtteil 37 liegt an der Achseinheit 3 an. Die Dichtteile 27, 37 sind hier an einer als Wandung 8 ausgebildeten Tragstruktur befestigt.

Die Dichtungseinheit 17 ist hier als O-Ring ausgebildet und umgibt die Achseinheit 3 radial. Die Dichtungseinheit 17 liegt an der Achseinheit 2 und dem Drehkörper 3 an. Dadurch wird der mit dem Medium 34 befüllte Teil des Aufnahmeraums 13 gegenüber einem anderen Teil des Aufnahmeraums 13 abgedichtet.

Möglich ist es auch, wie die untere Hälfte von Figur 2a zeigt, dass z. B. statt einer berührenden Dichtung 7 (obere Hälfte von Figur 2a) eine Labyrinthdichtung 7a eingesetzt wird. Das ist insbesondere dann vorteilhaft, wenn kein flüssiges magnetorheologisches Medium mit einer Trägerflüssigkeit eingesetzt wird, sondern ein pulverförmiges magnetorheologisches Medium. Dann reicht eine einfache und insbesondere eine mehrfache Umlenkung eines dünnen Dichtspaltes für eine ausreichende Dichtwirkung regelmäßig aus. Mit einem trockenen pulverförmigen magnetorheologisches Medium kann die Grundreibung reduziert und eine sehr geringe Grundreibung erreicht werden, sodass ein Nachlaufen des Eingabeelementes wie z. B. einem Mausrad nach dem Loslassen möglich ist. Das vereinfacht die Simulation eines Freilaufzustandes.

Um die Drehposition des Drehkörpers 3 zu überwachen und zur Ansteuerung der Bremseinrichtung 4 einsetzen zu können, ist hier eine Sensoreinrichtung 5 vorgesehen. Die Sensoreinrichtung 5 umfasst eine Magnetringeinheit 15 und einen Magnetfeldsensor 25.

Die Magnetringeinheit 15 ist hier diametral polarisiert und weist einen Nordpol und einen Südpol auf. Der hier als Hall-Sensor ausgebildete Magnetfeldsensor 25 misst das von der Magnetringeinheit 15 ausgehende Magnetfeld und ermöglicht so eine zuverlässige Bestimmung des Drehwinkels.

Zudem ist der Magnetfeldsensor 25 hier bevorzugt dreidimensional ausgebildet, sodass zusätzlich zur Rotation auch eine axiale Verschiebung des Drehkörpers 3 gegenüber der Achseinheit 2 gemessen werden kann. Dadurch können sowohl die Drehung als auch eine Druckknopf-Funktion, bzw. das Drücken und Blockieren 816 (Push/Pull) gleichzeitig mit demselben Sensor 25 gemessen werden. Die Bremsvorrichtung 1 kann darüber hinaus beispielsweise aber auch nur mit einer Drehfunktion und/oder einer Drückfunktion ausgestattet sein.

Die Sensoreinrichtung 5 ist besonders vorteilhaft in die Bremsvorrichtung 1 integriert. Dazu ist der Sensor 25 hier in die Bohrung 12 der Achseinheit 2 eingesetzt. Die Magnetringeinheit 15 umgibt den Sensor 25 radial und ist an dem Drehkörper 3 befes-tigt. Das hat den Vorteil, dass nicht Längentoleranzen, sondern nur genau herzustellende Durchmesser-Toleranzen zur Geltung kommen. Die radiale Lagerluft zwischen dem sich drehenden Drehkörper 3 und der stillstehenden Achseinheit 2 sind entsprechend gering und auch in der Serienfertigung gut beherrschbar.

Ein weiterer Vorteil ist, dass axiale Bewegungen bzw. Verschiebungen zwischen Drehkörper 3 und Achseinheit 2 das Sensorsignal nicht ungünstig beeinflussen, da in die radiale Richtung gemessen wird und der radiale Abstand für die Qualität des Messsignals im Wesentlichen maßgebend ist.

Ein Vorteil ist auch, dass die hier gezeigte Anordnung besonders unempfindlich gegen Verschmutzung und Flüssigkeiten ist, da der Sensor innen liegend angeordnet ist. Zudem kann der Sensor 25 in der Bohrung 12 beispielsweise mit einem Kunststoff umspritzt werden.

Die Bremsvorrichtung 1 ist mit einer Abschirmeinrichtung 9 zur Abschirmung der Sensoreinrichtung 5 vor dem Magnetfeld der Spuleneinheit 24 der Bremseinrichtung 4 ausgestattet. Die hier gezeigte Bremsvorrichtung 1 unterscheidet sich von den zuvor beschriebenen Bremsvorrichtungen 1 neben der Abschirmeinrichtung 9 insbesondere auch durch die Ausgestaltung des Drehkörpers 3 und des Zusatzteils 33. Die hier gezeigte Bremsvorrichtung ist beispielsweise ein Mausrad 804 einer Computermaus 801.

Der Drehkörper 3 ist hier als eine zylindrische Hülse ausgebildet und an seiner Außenseite vollständig von dem Zusatzteil 33 umgeben. Dabei schließt das Zusatzteil 33 den Drehkörper an derjenigen radialen Stirnseite ab, welche von der Magnetringeinheit 15 abgewandt ist.

Das Zusatzteil 33 weist eine radial umlaufende Erhebung mit einem erheblich vergrößerten Durchmesser auf. Dadurch eignet sich die hier gezeigte Bremsvorrichtung 1 besonders gut als Mausrad 804 einer Computermaus 801 oder dergleichen. Die Erhebung ist hier mit einer Nut ausgestaltet, in welche hier ein besonders griffiger Werkstoff und z. B. Gummi eingebettet ist.

Die hier gezeigte Bremsvorrichtung 1 weist zwei voneinander beabstandete Keillagereinrichtungen 6 auf. Die Keillagereinrichtungen 6 sind jeweils mit mehreren radial um die Achseinheit 2 angeordneten Bremskörpern 44 ausgestattet. Zwischen den Keillagereinrichtungen 6 ist die Spuleneinheit 24 angeordnet. Die Bremskörper 44 sind hier beispielsweise Wälzkörper, welche sich an der Innenseite des Drehkörpers 3 bzw. der Außenseite der Achseinheit 2 abrollen.

Die Magnetringeinheit 15 ist drehfest mit dem Drehkörper 3 gekoppelt, sodass die Magnetringeinheit 15 bei einer Drehung des Drehkörpers 3 mitgedreht wird. Der Magnetfeldsensor 25 ist hier in die Bohrung 12 der Achseinheit 2 eingesetzt. Die Magnetringeinheit 15 umgibt den Sensor 25 radial und ist axial endständig angeordnet. Der Magnetfeldsensor 25 ist hier mit einem axialen Versatz zum axialen Zentrum der Magnetringeinheit 15 angeordnet. Dadurch ergibt sich eine besonders hochauflösende und reproduzierbare Sensierung und insbesondere eine Erfassung, der axialen Position des Drehkörpers 3 in Bezug zur Achseinheit 2.

Die Abschirmeinrichtung 9 umfasst einen hier als Abschirmring 190 ausgebildeten Abschirmkörper 19. Die Abschirmeinrichtung 9 umfasst zudem eine Trenneinheit 29, welche hier durch einen mit einem Füllmedium 291 gefüllten Spalt 290 bereitgestellt wird. Zudem umfasst die Abschirmeinrichtung 9 eine magnetische Entkopplungseinrichtung 39, welche hier durch eine Entkopplungshülse 390 und einen Entkopplungsspalt 391 bereitgestellt wird.

Die Entkopplungshülse 190 umfasst hier eine Axialwand 392, an welcher die Dichtungseinrichtung 7 angeordnet ist. Zudem kann an der Axialwand 392 eine hier nicht näher dargestellte Lagereinrichtung 22 angeordnet sein.

Der Abschirmkörper 19 ist hier mit einem L-förmigen Querschnitt ausgestattet und aus einem magnetisch besonders leitfähigen Werkstoff gefertigt. Der Abschirmkörper 19 umgibt die Magnetringeinheit 15 an ihrer radialen Außenseite und an ihrer der Spuleneinheit 24 zugewandten axialen Seite. Zur magnetischen Entkopplung ist zwischen dem Abschirmkörper 19 und der Magnetringeinheit 15 der Spalt 290 angeordnet und mit einem Füllmedium 291 gefüllt. Dabei weist das Füllmedium 291 eine besonders geringe magnetische Leitfähigkeit auf. Zudem ist die Magnetringeinheit 15 über das Füllmedium 291 an dem Abschirmkörper 19 befestigt.

Zwischen dem Drehkörper 3 und dem Abschirmkörper 19 wird eine magnetische Entkopplung durch die Entkopplungseinrichtung 39 erreicht. Dazu weisen die Entkopplungshülse 390 und ein im Entkopplungsspalt 391 angeordnetes Füllmedium ebenfalls eine besonders geringe magnetische Leitfähigkeit auf. Die Entkopplungshülse 391 ist hier drehfest mit dem Abschirmkörper 19 und dem Zusatzteil 33 sowie dem Drehkörper 3 verbunden.

Um den Drehkörper 3 noch besser von der Sensoreinrichtung 5 entkoppeln zu können, ist der Drehkörper 3 hier axial beabstandet zur Entkopplungshülse 390 angeordnet. Das Ende des Drehkörpers 3, welches der Magnetringeinheit 15 zugewandt ist, ragt dabei nicht über den Bremskörper 44 hinaus. Zudem ist der Drehkörper 3 gegenüber dem Zusatzteil 33 axial zurückversetzt bzw. verkürzt. Dadurch ergibt sich auf sehr kleinem Bauraum eine besonders vorteilhafte magnetische und räumliche Trennung von Drehkörper 3 und Entkopplungshülse 390.

Da das Magnetfeld der Spuleneinheit 24 für die Bremswirkung über den Drehkörper 3 fließt, bietet eine solche Ausgestaltung eine besonders gute Abschirmung. Damit dieser magnetische Fluss den Sensor 25 möglichst wenig beeinflusst, wird der Drehkörper 3 in axialer Richtung früher beendet und das magnetisch nichtleitende Zusatzteil 33 übernimmt die konstruktiven Funktionen (Lagerstelle, Dichtstellen...). Der Abstand zum Sensor 25 ist dadurch auch größer und die Baugruppe wird insgesamt leichter.

Der Drehkörper 3 ist aus einem magnetisch besonders leitfähigen Material. Das Zusatzteil 33 und die Entkopplungshülse 390 sind hingegen aus einem magnetisch nicht leitfähigen Material. Der Abschirmkörper 19 und der Drehkörper 3 sind hier beispielsweise aus einem µ-Metall. Die hier als magnetisch nicht leitfähig beschriebenen Komponenten bestehen beispielsweise aus Kunststoff und weisen eine relative magnetische Permeabilität von kleiner 10 auf.

Die problematischen Felder, die die Drehwinkelmessung in der Regel stören können, sind vor allem die Felder in radialer Richtung. Diese Felder werden hier mit einem als Mantel wirkenden Abschirmkörper 19 aus geeignetem Material abgeschirmt, z. B. magnetisch leitendem Stahl. Zusätzlich kann so das Magnetfeld der Magnetringeinheit 15 noch verstärkt werden. Dadurch kann die Magnetringeinheit 15 kleiner (dünner) dimensioniert werden und so Material, Bauvolumen und Herstellungskosten eingespart werden.

Die Konstruktion wird auch dadurch verbessert, dass die Wandstärke des Abschirmkörpers 19 variiert wird und ein Spalt 290 zwischen Magnetringeinheit 15 und Abschirmkörper 19 vorgesehen ist. Durch den Spalt 290 zwischen Ring 15 und Abschirmkörper 19 können die Abschirmung und die Verstärkung optimal angepasst werden. Das Material des Abschirmkörpers 19 ist hier so gewählt, dass es nicht in magnetische Sättigung geht, damit äußere Magnetfelder ausreichend abgeschirmt werden (Material in Sättigung lässt Magnetfelder gleich wie Luft durch, also mit der magnetischen Feldkonstante µ0). Bei vorteilhafter Auslegung des Spaltes 290 zwischen Ring 15 und Abschirmkörper 19 schließt sich das Magnetfeld nicht zu stark über den Abschirmkörper 19 und das Feld im Zentrum beim Sensor 25 ist ausreichend homogen und wird erhöht verglichen mit einem Ring 15 gleicher oder größer ohne Abschirmkörper 19.

Die hier gezeigte Dimensionierung der Abschirmeinrichtung 9 ist besonders gut für ein Mausrad 804 einer Computermaus 801 geeignet und weist beispielsweise die nachfolgenden Abmessungen auf. Der Abschirmring 190 ist 0,5 mm dick, der Abstand zwischen Abschirmring 190 und Ring 15 auch 0,5 mm, die Breite des Rings 15 ist 2 mm und der Durchmesser des Rings 15 ist 8 mm. In diesem Fall ist das mögliche Störfeld von der Spuleneinheit 24 bei 140 µT, dadurch ergibt sich ein möglicher Fehler in der Winkelmessung von 0,1° (vgl. Erdmagnetfeld: ca. 48µT in Europa).

Figur 2b zeigt eine stark schematische Darstellung des Verlaufs der Bewegungsgeschwindigkeit bzw. Drehgeschwindigkeit 831 und des Signals 841 über der Zeit in einem einfachen Beispiel.

Der Benutzer berührt zunächst das stehende Eingabeelement 802 und beginnt das Eingabeelement 802 zu drehen. Zum Zeitpunkt 852 wird eine Drehgeschwindigkeit 832 ermittelt und es wird ein funktional (z. B. linear) davon abhängiges Signal 842 ausgegeben. Wenn der Benutzer das Eingabeelement 802 schneller dreht, wird das Signal verstärkt oder die entsprechende Ausgabe größer. Wenn der Benutzer das Eingabeelement 802 wieder langsamer dreht, wird das Signal kleiner oder die entsprechende Ausgabe kleiner.

Hier beschleunigt der Benutzer die Drehbewegung nach einer kurzen Reduktion deutlich und überschreitet mit der Drehgeschwindigkeit 833 oder Beschleunigung zum Zeitpunkt 853 das vorgegebene Maß 836. Genau gesagt überschreitet eine aus der Änderung der Winkelstellungen abgeleiteter Kennwert 835 das vorbestimmte Maß 836 zum Zeitpunkt 853.

Das bewirkt hier die Auslösung des Startbefehls für den Freilaufzustand. Der Zeitpunkt 853 wird damit zum Startzeitpunkt 853 der Simulation des Freilaufzustandes. Ab diesem Startzeitpunkt 853 wird bis zur Beendigung der Simulation des Freilaufzustandes 850 ein Signal 843 ausgegeben, welches nicht mehr von der aktuellen Stellung des Eingabeelementes 802 abhängt.

Grundsätzlich kann dabei das Eingabeelement 802 nach dem Anschub durch den Finger mehr oder weniger nachlaufen. Das ausgegebene oder abgeleitete Signal 843 ist unabhängig davon. In einfachen Fällen kann ein hoher Wert als Signal 843 eingestellt werden und über der Zeit konstant bleiben (Kurve 841a). Möglich ist es auch, dass das Signal mit der Zeit verringert wird (Kurve 841b). Die Reduktion über der Zeit kann auf Erfahrungswerten beruhen oder linear, quadratisch, exponentiell oder auch stufenweise reduziert werden. Möglich ist es auch, dass das Signal zu Beginn des Freilaufzustandes 850 vergrößert wird und somit größer gesetzt wird, als es bei der Drehgeschwindigkeit (oder Beschleunigung) zum Startzeitpunkt des Freilaufzustandes 850 ist. Das zeigt die Kurve 841cm, die hier während der Dauer des Freilaufzustandes 850 konstant ist, aber auch nichtlinear ausgebildet sein kann. Zu dem Zeitpunkt 853 findet sich hier ein vertikaler Sprung auf einen höheren Wert als zu erwarten wäre.

Das Signal und damit die Geschwindigkeit des virtuellen Scrollens kann in dem Freilaufzustand auch so schnell sein, wie die maximale Geschwindigkeit, mit der der Benutzer das Eingabeelement 802 andreht. Das Signal (und damit die Scrollgeschwindigkeit) kann auch die Geschwindigkeit übersteigen und ist so nicht auf die mechanisch mögliche Drehgeschwindigkeit begrenzt. Eine künstliche Intelligenz bzw. die Software in dem Eingabegerät oder dem zugeordneten Computer kann auch erkennen, wenn das gewünscht ist. Z.B. wenn eine Liste, durch die man scrollen will, sehr lang ist und die Wahrscheinlichkeit, dass man längere Passagen scrollen will, dadurch größer wird.

Der Endzeitpunkt 854 kann vordefiniert sein, z. B. eine vorbestimmte Zeitspanne nach dem Startzeitpunt 853 oder aber unbegrenzt weiterlaufen.

Möglich und bevorzugt ist es auch, dass die Simulation des Freilaufzustandes 850 beendet wird, wenn der Benutzer eine Taste oder einen Schalter betätigt oder z. B. eine Maustaste drückt oder eine Geste oder einen Sprachbefehl ausgibt. Ebenso kann auch der Startzeitpunkt 853 über eine separate Taste 838 oder einen Sprachbefehl, eine Geste oder dergleichen oder automatisch ausgelöst werden. Figur 2b zeigt repräsentativ dafür gestrichelte Pfeile von dem Taster oder Schalter 838 zu dem Startzeitpunkt 853 und dem Endzeitpunkt 854.

Möglich und bevorzugt ist es auch, dass der Endzeitpunkt 854 dann ermittelt wird und der Freilaufzustand zu dem Endzeitpunkt 854 beendet wird, an dem eine bewusste Änderung des Bewegungszustandes des Eingabeelement 802 ermittelt wird. Das kann z. B. der Fall sein, wenn sich das Eingabeelement 802 nicht mehr dreht und der Benutzer durch Berühren des Eingabeelementes 802 dieses einen (auch nur kleinen) Winkel dreht.

Möglich ist eine Bestimmung des Endzeitpunktes 854 auch, wenn sich das Eingabeelement 802 (noch) dreht und von dem Benutzer aktiv beschleunigt oder abgebremst wird. Ein "aktives" Eingreifen des Benutzers kann durch Vergleich mit dem bisherigen Bewegungsverlauf erfasst werden. Eine Beschleunigung kann regelmäßig nicht von selbst passieren. Eine Abbremsung über den Durchschnitt eines kurzen vergangenen Zeitraumes erfolgt auch nicht von selbst. Dabei können Besonderheiten des Systems als Erfahrungswerte berücksichtigt werden.

Zu der Ermittlung des Kennwertes 835 kann die Schwenk- oder Drehgeschwindigkeit und/oder die Beschleunigung etc. berücksichtigt werden.

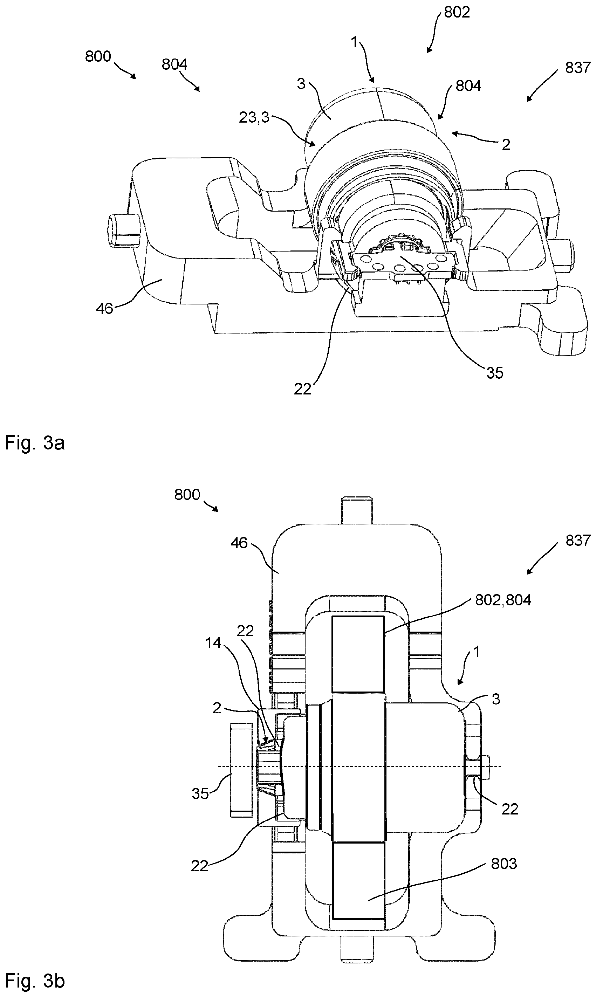

In Figuren 3a und 3b ist ein weiteres Ausführungsbeispiel eines erfindungsgemäßen Eingabegeräts 800 dargestellt. Das hier dargestellte erfindungsgemäße Eingabegerät 800 weist eine sehr kleine Bauform auf und ist insbesondere für den Einsatz in Verbindung mit einer Computermaus 801 geeignet.

Figur 3a zeigt hier eine perspektivische Ansicht, während Figur 3b eine Draufsicht des gleichen Ausführungsbeispiels zeigt. Das Eingabeelement 802 wird hier durch ein Eingaberad 803 gebildet, an welchem das Mausrad 804 angeordnet wird. Das Eingabeelement 802 ist hier als Fingerwalze 23 ausgebildet.

Die Achseinheit 2 ist hier außen an dem Drehkörper 3 des Mausrads 804 durch Lagereinrichtungen 22 gelagert und abgestützt. So ist hier eine besonders kleine Bauform ermöglicht, welche an dem Tragkörper 46 aufgenommen ist.

Über die Leitplatte 35 wird die steuerbare magnetorheologische Bremseinrichtung 1 insbesondere mit einer nicht dargestellten Rechnereinrichtung verbunden. Die Bewegbarkeit des Mausrads 804 wird durch die magnetorheologische Bremseinrichtung 1 gesteuert und beeinflusst. Gleichzeitig dient das Mausrad 804 weiterhin als Eingabeelement 802 für die Rechnereinrichtung. In Abhängigkeit einer Eingabebedingung kann die Bewegbarkeit des Eingabeelements 802 gezielt verzögert, festgehalten und freigegeben werden. Die Eingabebedingung selbst kann hier insbesondere in der Rechnereinrichtung oder dem Eingabegerät 800 und/oder dem Bedienelement 802 selbst hinterlegt und gespeichert sein kann. So erhält ein Benutzer hier ein vorgebbares und programmierbares haptisches Feedback über eine Eingabe. Dabei wird eine Eingabe des Benutzers über eine Sensoreinrichtung 5 erfasst, welche sowohl eine Schwenkbewegung 827 als auch eine Linearbewegung 826 erfassen kann. Darüber hinaus erfasst die Sensoreinrichtung 5 auch die Bewegungsparameter, welche hier die Drehrichtung, die Geschwindigkeit und die Beschleunigung umfassen. Eine Linearbewegung 826 des Mausrads 803 wird hier durch ein Herunterdrücken des Mausrads 803 erzeugt.

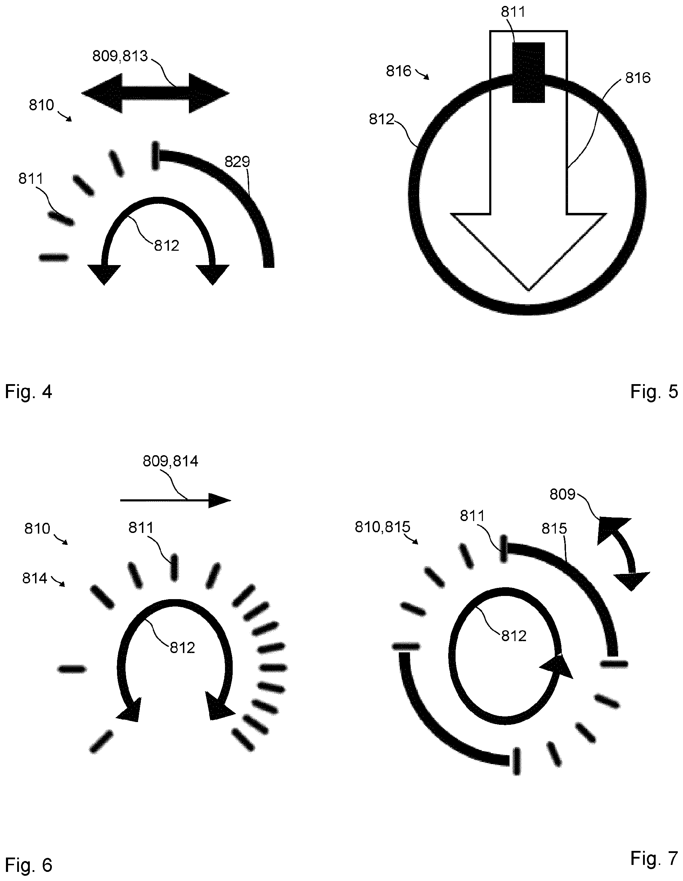

In Figur 4 ist hier ein Haptikmodus des erfindungsgemäßen Verfahrens schematisch hier beispielhaft für das Eingabegerät 800, welches als Mausrad 803 ausgeführt ist, dargestellt. Ein Haptikmodus beschreibt hier eine mögliche Ausführungsform des Verfahrens zur Steuerung des Eingabeelements 802.

Die nachstehend für die einzelnen Verfahrensmerkmale vergebenen Bezugszeichen verweisen beispielhaft zur Visualisierung hier auf Pfeile und piktogrammartige Zeichen. Hierdurch sollen die einzelnen Schritte/Merkmale des Verfahrens zum besseren Verständnis visualisiert werden.

In dem hier dargestellten Haptikmodus arbeitet das Mausrad 804 richtungsabhängig 813 in Abhängigkeit der Bewegung 809 in Bewegungsbereich 812. Wird das hier als Mausrad 803 ausgeführte Eingabeelement 802 nach links gedreht, erzeugt die Bremseinrichtung 1 eine drehwinkelabhängige Rasterung 810 mit Anschlagpunkten 811, welche der Benutzer hier als überwindbaren Widerstand bei Drehen wahrnimmt. Wird das Mausrad 803 nach rechts bewegt, liegt ein Freilauf 829 vor, bei dem das Mausrad 803 frei drehbar ist. Hierdurch wird dem Benutzer ermöglicht, ein direktes Feedback über seine Eingabe zu erhalten.

Ein weiterer Haptikmodus des Verfahrens ist in der Figur 5 dargestellt. Nach einer Linearbewegung 826 des Mausrads 803 wird die Bewegbarkeit des Eingabeelements 802 durch die magnetorheologische Bremseinrichtung 1 vollständig gesperrt. Dadurch wird eine ungewollte parallele Fehleingabe des Benutzers effektiv vermieden. Die Kraft in dem Anschlagpunkt 811 ist so groß, dass ein Benutzer diese nicht überwinden kann. Der Haptikmodus wird auch als Drücken und Blockieren 816 bezeichnet.

In Figur 6 ist ein weiterer Haptikmodus dargestellt. Die Rasterung 810 im Bewegungsbereich 812 wird hier geschwindigkeitsabhängig 814 oder auch beschleunigungsabhängig 814 verändert. Bei einer schnellen Drehbewegung des Mausrads 803 durch den Benutzer verändert sich dabei ein Abstand zwischen zwei nebeneinanderliegenden Rasterpunkten 811 geschwindigkeitsabhängig 814. Bei der dargestellten Bewegung 809 verringert sich der Abstand der Anschlagpunkte 811 mit steigender Geschwindigkeit, welche der Benutzer beim Drehen wahrnimmt.

In Figur 7 ist eine weitere Ausführungsform des Verfahrens als Haptikmodus dargestellt. Das Eingabeelement 802 ist hier frei durchdrehbar, sodass ein endloser Bewegungsbereich 812 vorliegt. In dem hier vorliegenden Fall werden einzelne Anschlagpunkte 811 der Rasterung 810 übersprungen 815, wenn hier eine hohe Beschleunigung des Eingabeelements 802 vorliegt.

Der Bewegungsbereich 812 eines Eingabeelements 802 kann in Abhängigkeit des Haptikmodus veränderlich und insbesondere einstellbar sind. Vorteilhaft ist so eine Anpassung der Bewegbarkeit und einer haptischen Rückmeldung an die individuellen Bedürfnisse eines Benutzers bzw. in Abhängigkeit einer Benutzung bzw. eines Programms möglich.

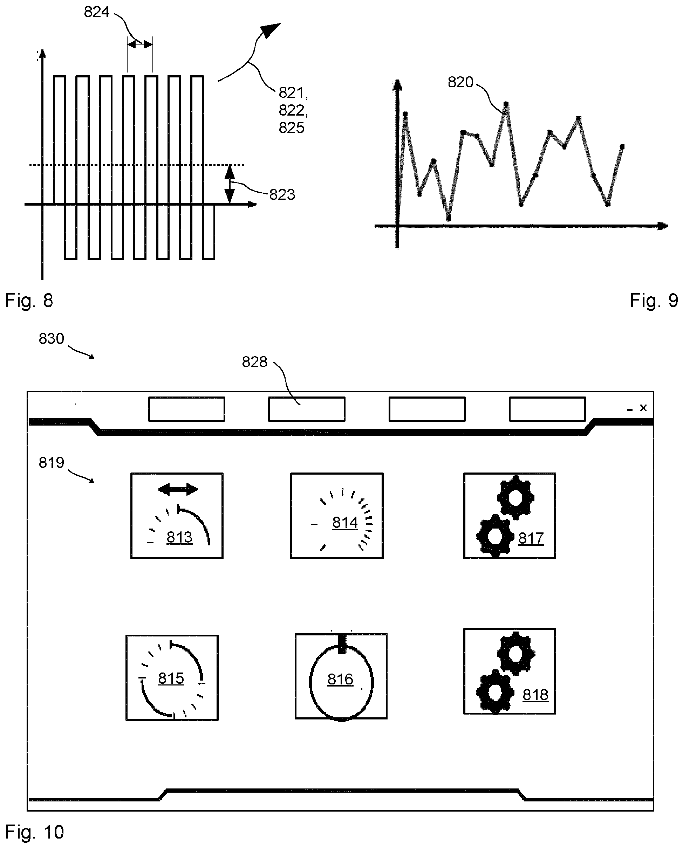

In Figur 8 ist ein weiterer Haptikmodus des Verfahrens dargestellt. Hier wird die Bremseinrichtung mit einem Strom- und/oder Spannungssignal mit einer Frequenz 824 von 100 Hz angesteuert. Das Vorzeichen des Frequenzsignals variiert. Dadurch erhält ein Benutzer ein haptisches Feedback in Form Vibration 825. Ein Anteil des positiven und negativen Stromflusses ist dabei asymmetrisch 823 verteilt. Dies führt zu einer Veränderung und gleichzeitig zu einer vorteilhaften Wahrnehmung der Vibration 825 durch den Benutzer. Durch die hohe Frequenz wird außerdem ein hörbarer Ton 821 durch die Bremseinrichtung 1 erzeugt. Dieser Haptikmodus eignet sich vorteilhaft für zur Aussendung eines akustischen Warnsignals 822 an den Benutzer.

Der hier in Figur 9 dargestellt Haptikmodus basiert auf einer Ansteuerung der Bremseinrichtung 1 mit einem zufälligen Stromsignal 820. Dadurch kann hier beispielsweise der Verschleiß eines Lagers oder auch beispielsweise Sand in einem Getriebe für einen Benutzer dargestellt werden.

In Figur 10 ist eine mögliche Benutzeroberfläche 830 dargestellt, durch welche die einzelnen Haptikmodi zu einem Profil 819 zusammengefasst veränderbar sind. Die Benutzeroberfläche 830 kann dabei mehrere Einstellebenen 828 aufweisen. Ein Benutzer kann die Ansteuerung der Bremseinrichtung 1 in Abhängigkeit der Richtung 813 und der Geschwindigkeit 814 und Beschleunigung 814 einstellen. Darüber hinaus können auch die Eingabebedingungen für ein Überspringen 815 und ein Drücken und Blockieren 816 eingestellt werden. Profile können individuell 817 gespeichert werden. Außerdem ist es hier möglich, voreingestellte Profile 818, beispielsweise von anderen Benutzern insbesondere programmspezifisch anzuwenden.

In allen Ausgestaltungen kann das Eingabegerät um eine akustische oder visuelle Ausgabe ergänzt werden. Dabei kann die akustische Ausgabe auch durch die Bremseinrichtung selbst erzeugbar sein.

In allen Ausgestaltungen kann das Eingabegerät auch durch Sensoren erweitert werden, welche mit dem Nutzer direkt oder indirekt (WLAN, Bluetooth...) verbunden sind (Puls bzw. Pulsuhr, Blutdruck, Stress Level...) und/oder das Umfeld detektieren (Bilderkennung, Ultraschall, Laser, LIDAR, Mikrofone...) und aus den daraus gewonnenen und analysierten Informationen (Umfeldinformationen, Nutzerinformationen) die Haptik des Eingabegeräts verändern.

### Bezugszeichenliste:

| | | | |
|---|---|---|---|
| 1 | Bremseinrichtung | 806 | Bedienknopf |
| 2 | Achseinheit | 807 | Daumenwalze |
| 3 | Drehkörper | 808 | Gamepad |
| 4 | Bremseinrichtung | 809 | Bewegung |
| 5 | Sensoreinrichtung | 810 | Rasterung |
| 6 | Keillagereinrichtung | 811 | Anschlagpunkt |
| 7, 7a | Dichtungseinrichtung | 812 | Bewegungsbereich |
| 8 | Wandung | 813 | richtungsabhängig |
| 9 | Abschirmeinrichtung | 814 | geschwindigkeitsabhängig, beschleunigungsabhängig |
| 11 | Anschlussleitung | | |
| 12 | Bohrung | 815 | Überspringen |
| 13 | Aufnahmeraum | 816 | Drücken und Blockieren |
| 14 | Anbindung | 817 | individuell |
| 15 | Magnetringeinheit | 818 | Vorgabe/Fremdprofil |
| 17 | Dichtungseinheit | 819 | Profil |
| 19 | Abschirmkörper | 820 | zufälliger Strom |
| 21 | Kern | 821 | Warnton |
| 22 | Lagereinrichtung | 822 | Warnsignal |
| 23 | Fingerwalze | 823 | Asymmetrie |
| 24 | Spuleneinheit | 824 | Frequenz |
| 25 | Magnetfeldsensor | 825 | Vibration |
| 27 | Dichtteil | 826 | Linearbewegung |
| 29 | Trenneinheit | 827 | Schwenkbewegung |
| 33 | Zusatzteil | 828 | Einstellebenen |
| 34 | Medium | 829 | Leerlauf, frei drehbar |
| 35 | Leiterplatte | 830 | Benutzeroberfläche |
| 37 | Dichtteil | 831 | Geschwindigkeitsverlauf |
| 39 | Entkopplungseinrichtung | 832-834 | Geschwindigkeit |
| 44 | Bremskörper | 833a | Beschleunigung |
| 45 | Signalleitung | 835 | Kennwert |
| 46 | Tragkörper | 836 | vorbestimmtes Maß |
| 50 | Konsole | 837 | Winkelstellung |
| 190 | Abschirmung | 838 | Taster, Schalter |
| 290 | Spalt | 841, 841a-841c | Signalverlauf |
| 291 | Füllmedium | 842-844 | Signal |
| 390 | Entkopplungshülse | 850 | Freilaufzustand |
| 391 | Entkopplungsspalt | 852 | Zeitpunkt |
| 392 | Axialwand | 853 | Startzeitpunkt |
| 800 | Eingabegerät | 854 | Endzeitpunkt |
| 801 | Computermaus | | |
| 802 | Eingabeelement | | |
| 803 | Eingaberad | | |
| 804 | Mausrad | | |
| 805 | Joystick | | |

## Patentansprüche

1. Verfahren zum Betreiben eines Eingabegeräts (800), wobei wenigstens ein schwenkbares Eingabeelement (802) des Eingabegeräts (800) zur Durchführung einer Eingabe wenigstens teilweise manuell betätigt und verschwenkt wird und wobei wenigstens eine Änderung einer Winkelstellung (837) des Eingabeelements (802) mittels wenigstens einer Sensoreinrichtung (5) erfasst wird und wobei ein Signal (842) ausgegeben wird, welches wenigstens durch die Änderung der Winkelstellung (837) beeinflusst wird,
**dadurch gekennzeichnet,**
**dass** ein Freilaufzustand (850) des schwenkbaren Eingabeelements (802) ab einem Startzeitpunkt (853) simuliert wird, und dass ab dem Startzeitpunkt (852) in dem Freilaufzustand (850) ein Signal (842) ausgegeben wird, welches unabhängig von der Winkelstellung (837) des Eingabeelements (802) ist.

2. Verfahren nach dem vorhergehenden Anspruch, wobei der Startzeitpunkt (852) gesetzt wird, wenn der Benutzer einen Startbefehl abgibt, wobei der Startbefehl insbesondere durch Drücken einer Taste (838) oder eines Schalters oder akustisch oder optisch ausgelöst werden kann.

3. Verfahren nach einem der vorhergehenden Ansprüche, wobei der Startbefehl ausgelöst wird, wenn ein Kennwert (835) für eine zeitliche Änderung der Winkelstellung des Eingabeelements (802) ein vorbestimmtes Maß (836) überschreitet.

4. Verfahren nach einem der vorhergehenden Ansprüche, wobei die Simulation des Freilaufzustandes (850) beendet wird, wenn der Benutzer eine andere Eingabe vornimmt.

5. Verfahren nach einem der vorhergehenden Ansprüche, wobei die Simulation des Freilaufzustandes (850) beendet wird, wenn sich das Eingabeelement (802) nicht dreht (steht) und der Benutzer das Eingabeelement (802) beginnt zu drehen, sodass die Sensoreinrichtung (5) eine Änderung der Winkelstellung (837) detektiert
und/oder wobei die Simulation des Freilaufzustandes (850) beendet wird, wenn sich das Eingabeelement (802) dreht und der Benutzer die Geschwindigkeit des Eingabeelements (802) aktiv verändert und abbremst oder beschleunigt,
und/oder wobei in dem Freilaufzustand (850) ein Signal (843) ausgegeben wird, welches unabhängig von der zeitlichen Änderung der Winkelstellung (841) des Eingabeelements (802) während des Freilaufzustandes (850) ist.

6. Verfahren nach einem der vorhergehenden Ansprüche, wobei das Signal (842-844) von der Geschwindigkeit (843) des Eingabeelements (802) beim Überschreiten des vorbestimmten Maßes (836) und/oder von der Beschleunigung (843a) des Eingabeelements (802) beim Überschreiten des vorbestimmten Maßes (836) abhängt.

7. Verfahren nach Anspruch 3, wobei der Kennwert (835) aus einer Geschwindigkeit (832-834) und/oder einer Beschleunigung (833a) des Eingabeelementes (802) abgeleitet wird und/oder wobei das Signal nach dem Startzeitpunkt größer ist als das Signal an dem Zeitpunkt, an dem der Kennwert (835) für eine zeitliche Änderung der Winkelstellung des Eingabeelements (802) ein vorbestimmtes Maß (836) überschreitet.

8. Verfahren nach einem der vorhergehenden Ansprüche, wobei das Signal (842-844) von der Zeitdauer ab dem Startzeitpunkt (853) abhängt.

9. Verfahren nach einem der vorhergehenden Ansprüche, wobei während des Freilaufzustandes (850) eine zeitliche Abnahme der Geschwindigkeit des Eingabeelements (802) simuliert wird und wobei eine Länge des Freilaufzustandes begrenzt wird.

10. Verfahren nach einem der vorhergehenden Ansprüche, wobei das Verhalten des Benutzers durch künstliche Intelligenz ausgewertet wird und das Signal in dem Freilaufzustand in Abhängigkeit von der Auswertung eingestellt wird.

11. Verfahren nach einem der vorhergehenden Ansprüche, wobei wenigstens eine Drehung des Eingabeelements (802) mittels wenigstens einer steuerbaren magnetorheologischen Bremseinrichtung (1) gezielt (802) verzögert, festgehalten und freigegeben wird.

12. Verfahren nach einem der vorhergehenden Ansprüche, wobei bei einer Eingabe in wenigstens ein Eingabemenü mit inaktiven und aktiven Eingabefeldern eine Bewegbarkeit des Eingabeelements (802) in Abhängigkeit davon eingestellt wird, ob das Eingabefeld inaktiv oder aktiv ist.

13. Verfahren nach einem der vorhergehenden Ansprüche, wobei das Eingabegerät (800) zum Gaming, insbesondere für Computerspiele, eingesetzt wird wobei die Bewegbarkeit des Eingabeelements (802) in Abhängigkeit eines mittels der Rechnereinrichtung erzeugten Szenarios eingestellt wird und wobei die Bewegbarkeit des Eingabeelements (802) umso stärker verzögert wird, desto höher eine im Szenario fiktiv aufzuwendende Kraft und/oder desto schwieriger eine im Szenario fiktiv vorzunehmende Handlung ist.

14. Verfahren (1) nach einem der vorhergehenden Ansprüche, wobei eine Drehbewegung des Bedienteils (101) mittels der Bremseinrichtung (1) in Abhängigkeit eines Betriebszustands eines Kraftfahrzeugs gebremst wird und wobei der Betriebszustand wenigstens einen Fahrbetrieb und wenigstens einen Standbetrieb, vorzugsweise einen Aufladebetrieb für eine Traktionsbatterie eines wenigstens teilweise elektrisch betriebenen Fahrzeugs umfasst.

15. Eingabegerät (800) zur Durchführung des Verfahrens nach wenigstens einem der vorhergehenden Ansprüche.

## Claims

1. Method for operating an input device (800), wherein at least one pivotable input element (802) of the input device (800) is at least partially manually operated and pivoted to carry out an input and at least one change in an angular position (837) of the input element (802) is detected by at least one sensor device (5) and a signal (842) is output which is influenced at least by the change in the angular position (837), **characterized in that** a freewheeling state (850) of the pivotable input element (802) from a starting time (853) is simulated, and that from the starting time (852) in the freewheeling state (850), a signal (842) is output, which is independent of the angular position (837) of the input element (802).

2. Method according to the preceding claim, wherein the start time (852) is set when the user issues a start command, the start command being able to be triggered in particular by pressing a button (838) or a switch or acoustically or optically.

3. Method according to one of the preceding claims, wherein the start command is triggered when a characteristic value (835) for a temporal change in the angular position of the input element (802) exceeds a predetermined level (836).

4. Method according to one of the preceding claims, wherein the simulation of the freewheeling state (850) is ended when the user makes another input.

5. Method according to one of the preceding claims, wherein the simulation of the freewheeling state (850) is ended when the input element (802) does not rotate (stands) and the user begins to rotate the input element (802), so that the sensor device (5) a change in the angular position (837) is detected and/or wherein the simulation of the freewheeling state (850) terminates when the input element (802) rotates and the user actively changes the speed of the input element (802) by decelerating or accelerating it, and/or wherein a signal (843) is output in the freewheeling state (850) which is independent of the temporal change in the angular position (841) of the input element (802) during the freewheeling state (850).

6. Method according to one of the preceding claims, wherein the signal (842-844) depends on the speed (843) of the input element (802) when the predetermined level (836) is exceeded and / or on the acceleration (843a) of the input element (802). when the predetermined measure (836) is exceeded.

7. Method according to one of the preceding claims, wherein the characteristic value (835) is derived from a speed (832-834) and / or an acceleration (833a) of the input element (802) and/or wherein the signal after the start time is greater than the signal at the time when the characteristic value (835) for a temporal change in the angular position of the input element (802) exceeds a predetermined dimension (836)..

8. Method according to one of the preceding claims, wherein the signal (842-844) depends on the time period from the start time (853).

9. Method according to one of the preceding claims, wherein during the freewheeling state (850), a temporal decrease in the speed of the input element (802) is simulated and wherein the duration of the freewheeling state is limited.

10. Method according to one of the preceding claims, wherein the behavior of the user is evaluated by artificial intelligence and the signal in the freewheeling state is adjusted depending on the evaluation.

11. Method according to one of the preceding claims, wherein at least one rotation of the input element (802) is selectively delayed (802), held and released by means of at least one controllable magnetorheological braking device (1).

12. Method according to one of the preceding claims, wherein when an input is made in at least one input menu with inactive and active input fields, the mobility of the input element (802) is set depending on whether the input field is inactive or active.

13. The method according to any one of the preceding claims, wherein the input device (800) is used for gaming, in particular for computer games, the mobility of the input element (802) being set depending on a scenario generated by the computer device and the mobility of the input element (802 ) the more the delay is, the greater the force that is fictitiously required in the scenario and/or the more difficult the action that is fictitiously carried out in the scenario.

14. Method (1) according to one of the preceding claims, wherein the rotational movement of the operating part (101) is braked by means of the braking device (1) depending on an operating state of a motor vehicle and wherein the operating state includes at least one driving mode and at least one stationary mode, preferably a charging mode for comprises a traction battery of an at least partially electrically operated vehicle.

15. Input device (800) for carrying out the method according to at least one of the preceding claims.

## Revendications

1. Procédé opérationnel d'un dispositif d'entrée (800), lors duquel, pour procéder à une entrée, l'on actionne et l'on fait pivoter au moins en partie manuellement un élément d'entrée (802) pivotant du dispositif d'entrée (800) et au moins une modification d'une position angulaire (837) de l'élément d'entrée (802) est détectée au moyen d'au moins un système de capteur (5) et un signal (842) est délivré, lequel est influencé au moins par la modification de la position angulaire (837),
**caractérisé**
**en ce qu'**un état de course libre (850) de l'élément d'entrée (802) pivotant est simulé après un moment de départ (853) et en ce qu'à partir du moment de départ (852) dans l'état de course libre (850), un signal (842) est délivré, lequel est indépendant de la position angulaire (837) de l'élément d'entrée (802).

2. Procédé selon la revendication précédente, le moment de départ (852) étant placé lorsque l'utilisateur délivre un ordre de départ, l'ordre de départ pouvant être déclenché notamment par l'appui sur une touche (838) ou sur un interrupteur ou par voie acoustique ou optique.

3. Procédé selon l'une quelconque des revendications précédentes, l'ordre de départ étant déclenché lorsqu'une valeur caractéristique (835) pour une modification temporelle de la position angulaire de l'élément d'entrée (802) dépasse une dimension (836) prédéfinie.

4. Procédé selon l'une quelconque des revendications précédentes, la simulation de l'état de course libre (850) prenant fin lorsque l'utilisateur procède à une autre entrée.

5. Procédé selon l'une quelconque des revendications précédentes, la simulation de l'état de course libre (850) prenant fin, lorsque l'élément d'entrée (802) ne tourne pas (est au repos) et l'utilisateur commence à faire tourner l'élément d'entrée (802), de sorte que le système de capteur (5) détecte une modification de la position angulaire (837)
et / ou la simulation de l'état de course libre (850) prenant fin, lorsque l'élément d'entrée (802) tourne et l'utilisateur modifie activement la vitesse de l'élément d'entrée (802) et la freine ou l'accélère,
et / ou dans l'état de course libre (850), un signal (843) étant délivré, lequel est indépendant de la modification temporelle de la position angulaire (841) de l'élément d'entrée (802) pendant l'état de course libre (850).

6. Procédé selon l'une quelconque des revendications précédentes, le signal (842 à 844) dépendant de la vitesse (843) de l'élément d'entrée (802) lors du dépassement de la dimension (836) prédéfinie et / ou de l'accélération (843a) de l'élément d'entrée (802) lors du dépassement de la dimension (836) prédéfinie.

7. Procédé selon la revendication 3, la valeur caractéristique (835) étant déduite d'une vitesse (832 à 834) et / ou d'une accélération (833a) de l'élément d'entrée (802) et / ou après le moment de départ, le signal étant plus élevé que le signal au moment auquel la valeur caractéristique (835) pour une modification temporelle de la position angulaire de l'élément d'entrée (802) dépasse une dimension (836) prédéfinie.

8. Procédé selon l'une quelconque des revendications précédentes, le signal (842 à 844) dépendant d'une période à partir du moment de départ (853).

9. Procédé selon l'une quelconque des revendications précédentes, pendant l'état de course libre (850), une diminution temporelle de la vitesse de l'élément d'entrée (802) étant simulée et une longueur de l'état de course libre étant limitée.

10. Procédé selon l'une quelconque des revendications précédentes, le comportement de l'utilisateur étant évalué par une intelligence artificielle et le signal dans l'état de course libre étant réglé en fonction de l'évaluation.

11. Procédé selon l'une quelconque des revendications précédentes, au moins une rotation de l'élément d'entrée (802) étant temporisée, retenue et libérée de manière ciblée (802) au moyen d'au moins un système de freinage (1) magnétorhéologique susceptible d'être commandé.

12. Procédé selon l'une quelconque des revendications précédentes, lors d'une entrée dans au moins un menu d'entrées doté de champs d'entrée inactifs et actifs, une mobilité de l'élément d'entrée (802) étant réglée indépendamment du fait si le champ d'entrée est inactif ou actif.

13. Procédé selon l'une quelconque des revendications précédentes, le dispositif d'entrée (800) étant mis en œuvre pour le jeu, notamment pour des jeux informatiques, la mobilité de l'élément d'entrée (802) étant réglée en fonction d'un scénario généré au moyen du système d'ordinateur et la mobilité de l'élément d'entrée (802) étant temporisée d'autant plus qu'une force qui doit être fictivement appliquée selon le scénario est forte et / ou un qu'une action à laquelle il doit être fictivement procédé selon le scénario est difficile.

14. Procédé (1) selon l'une quelconque des revendications précédentes, un déplacement en rotation de la partie de commande (101) au moyen du système de freinage (1) étant freiné en fonction d'un état opérationnel d'un véhicule automobile et l'état opérationnel comprenant au moins un mode de déplacement et au moins un mode arrêté, de préférence un mode de charge d'une batterie de traction d'un véhicule à fonctionnement au moins partiellement électrique.

15. Dispositif d'entrée (800), destiné à réaliser le procédé selon au moins l'une quelconque des revendications précédentes.
